(19) Europäisches Patentamt
European Patent Office
Office européen des brevets

(11) **EP 1 565 709 B1**

(12) **EUROPEAN PATENT SPECIFICATION**

(45) Date of publication and mention
of the grant of the patent:
**19.03.2014 Bulletin 2014/12**

(51) Int Cl.:
***G01F 1/74*** *(2006.01)*

(21) Application number: **03786809.8**

(22) Date of filing: **17.11.2003**

(86) International application number:
**PCT/US2003/036848**

(87) International publication number:
**WO 2004/046660 (03.06.2004 Gazette 2004/23)**

(54) **AN APPARATUS AND METHOD FOR PROVIDING A FLOW MEASUREMENT COMPENSATED FOR ENTRAINED GAS**

APPARAT UND VERFAHREN ZUR GEWINNUNG EINER FÜR MITGEFÜHRTES GAS KOMPENSIERTEN STRÖMUNGSMESSUNG

APPAREIL ET PROCEDE PRODUISANT UNE MESURE DE DEBIT COMPENSEE PAR RAPPORT AU GAZ ENTRAINE

(84) Designated Contracting States:
**AT BE BG CH CY CZ DE DK EE ES FI FR GB GR HU IE IT LI LU MC NL PT RO SE SI SK TR**

(30) Priority: **15.11.2002 US 426723 P**
**21.01.2003 US 441395 P**
**22.01.2003 US 441652 P**
**27.01.2003 US 442968 P**
**16.09.2003 US 503349 P**
**07.11.2003 US 518171 P**

(43) Date of publication of application:
**24.08.2005 Bulletin 2005/34**

(73) Proprietor: **CiDra Corporation**
**Wallingford, CT 06492 (US)**

(72) Inventors:
• **GYSLING, Daniel, L.**
**Glastonbury, CT 06033 (US)**
• **LOOSE, Douglas, H.**
**Southington, CT 06489 (US)**

(74) Representative: **Klunker . Schmitt-Nilson . Hirsch**
**Patentanwälte**
**Destouchesstrasse 68**
**80796 München (DE)**

(56) References cited:
**WO-A-02/46705**    **US-A- 4 080 837**
**US-A- 5 285 675**    **US-A1- 2002 095 263**
**US-A1- 2002 129 662**    **US-B1- 6 354 147**

**Description**

**Technical Field**

This invention relates to an apparatus for measuring a flow having entrained gas therein, and more particularly to an apparatus that measures the speed of sound propagating through the flow to determine the gas volume fraction of the gas in the process flow and compensating the output measurement of a flow meter (e.g., a volumetric flow meter and a consistency meter) for entrained gas.

**Background Art**

The present invention provides an apparatus and method of measuring volumetric flow rate and gas volume fraction in slurries used in the paper and pulp industries and in other industries. Slurries commonly used in the paper and pulp industry are mostly water and typically contain between 1% and 10% pulp content by mass. Monitoring the flow rate and consistency of the slurry can lead to improved quality and efficiency of the paper production process.
Processes run in the paper and pulp industry can often, either intentionally or unintentionally, entrain gas/air. Typically, this entrained air results in measurement errors in process monitoring equipment such as volumetric flow measurements and consistency meters.
Industry estimates indicate that entrained air levels of 2-4% are common. Since most process flow monitors are unable to distinguish between air and liquid, interpreting their output as liquid flow rates would result in a overestimate of the liquid by the volumetric flow rate of the air present at the measurement location. Similarly, for the void fraction of the air within the pipe can cause errors in consistency measurements.
Thus, providing a method and apparatus for measuring entrained air in paper and pulp slurries would provide several benefits. Firstly, it would provide a means to screen the output of process instrumentation. Secondly, in addition to screening the measurements, an accurate measurement of the entrained air would provide a means to correct the output of volumetric flow meters and consistency meters. Thirdly, monitoring variations in the amount of entrained air in a given process could be indicative of process anomalies, such a worn bushing or cavitating pumps and/or valves.
Multiphase process flow rate is a critical process control parameter for the paper and pulp industry. Knowing the amounts of liquid, solids and entrained gases flowing in process lines is key to optimizing the overall the papermaking process (Matula, 2000). Unfortunately, significant challenges remain in the achieving accurate, reliable, and economical monitoring of multiphase flow rates of paper and pulp slurries. Reliability challenges arise due the corrosive and erosive properties of the slurry. Accuracy challenges stem from the multiphase nature of the slurries. Economical challenges arise from the need to reduce total life time cost of flow measurement, considering installation arid maintenance costs in addition to the initial cost of the equipment.
Currently, there is an unmet need for multiphase flow measurement in the paper and pulp industry. Real time flow measurement is typical restricted to monitoring the total volumetric flow rate in a process line without providing information on the composition of the process mixture. For example, electromagnetic flow meters are the most widely used flow meters in the paper and pulp industry, however they provide no indication of presence of entrained air, with its presence resulting in an over prediction of the volumetric flow of process fluid by the amount of air entrained. Consistency meter provide a measurement of the percentage of solids within the process, however this technology remains more of an art than a science. Furthermore, although entrained air is known to have a large, often deleterious, impact on the paper making process, instrumentation is currently not available to provide this measurement on a real time basis.
The present invention an accurate, reliable multiphase flow measurement in the paper and pulp industry.
In one embodiment of the present invention, the apparatus and method improves the determination of consistency of paper and pulp slurries. Consistency refers to the mass fraction of pulp contained in water and pulp slurries used in the paper making process. Consistency measurements are critical in the optimization of the paper making process. Currently, many companies produce consistency meters employing various technology to serve the paper and pulp industry. Unfortunately, accurate and reliable measurement of consistency remains an elusive objective. Typically, interpreting the output of a consistency meter in terms of actual consistency is more of an art than a science.
Of the various types of consistency meters on the market, microwave based meters may represent the best the solution for many applications. One such microwave-based consistency meter is manufactured by Toshiba. Microwave consistency meters essentially measure speed or velocity the microwave signal propagates through the medium being measured. For example, the speed of the microwave signal through water is approximately 0.1 time the speed of light in a vacuum (c), through air is approximately 1.0 times the speed of light in a vacuum, and through fiber (or pulp) is approximately 0.6 times the speed of light in a vacuum.
The velocity of the microwave signal propagating through the paper pulp slurry is measure by the conductive effects of the slurry, in accordance with the following equation:

$$V = c * sqrt(E)$$

Where V is the velocity of the microwave signal propagating through the slurry, c is the speed of light in a vacuum, and E is the relative conductivity of the material. Typical values of relative conductivity for material comprising a paper/pulp slurry, for example, are:

Water relative conductivity = 80;
Air relative conductivity = 1; and
Fiber relative conductivity = 3.

These meters typically work well in the absence of entrained air. With entrained air present, the air displaces water and looks like additional pulp fiber to the microwave meter. Thus, uncertainty in the amount of entrained air translates directly into uncertainty in consistency.

## Summary of the Invention

The invention is directed to an apparatus and method according to the independent claims.

An apparatus for measuring a parameter of a process flow flowing within a pipe includes a first meter portion and a second meter portion. The first meter portion provides a meter measurement signal indicative of a parameter of the flow propagating through the pipe. The second meter portion includes a sensor for providing sound measurement signal indicative of the speed of sound propagating within the pipe. A processor provides a compensated meter measurement signal indicative of a measurement parameter corrected for entrained gas in the flow propagating through the pipe, in response to meter measurement signal and the sound measurement signal.

The foregoing and other objects, features and advantages of the present invention will become more apparent in light of the following detailed description of exemplary embodiments thereof.

## Brief Description of the Drawings

Fig. 1 is a schematic illustration of an apparatus having an array of sensors onto a pipe for measuring the volumetric flow and gas volume fraction of the mixture flowing in the pipe having entrained gas/air therein, in accordance with the present invention.

Fig. 2 is a block diagram of an embodiment of the apparatus of Fig. 1, in accordance with the present invention.

Fig. 3 is a functional flow diagram of an apparatus embodying the present invention that compensates the volumetric flow measurement of a volumetric flow meter, in accordance with the present invention.

Fig. 4 is a block diagram of an apparatus for measuring the speed of sound propagating through a process flow flowing within a pipe, in accordance with the present invention.

Fig. 5 is a plot of Mixture Sound Speed as a function of gas volume fraction for a 5% consistency slurry over a range of process pressures, in accordance with the present invention.

Fig. 6 is a plot of Mixture Sound Speed a function of gas volume fraction for pure water and a 5% consistency slurry at 4 atm process pressure, in accordance with the present invention.

Fig. 7 is a plot of Mixture Sound Speed as a function of gas volume fraction for different consistency slurry over a range of process pressures, in accordance with the present invention.

Fig. 8 is a plot of Mixture Sound Speed a function of entrained air volume fraction for slurry at a process pressure, in accordance with the present invention.

Fig. 9 is a K-w plot for acoustic field within 3 inch pipe containing ~2% air by volume entrained in water flowing 240 gpm, in accordance with the present invention.

Fig. 10 is a cross-sectional view of a pipe having a turbulent pipe flowing having coherent structures therein, in accordance with the present invention.

Fig. 11 is a block diagram of an apparatus for measuring the vortical field of a process flow within a pipe, in accordance with the present invention.

Fig. 12 a kω plot of data processed from an apparatus embodying the present invention that illustrates slope of the convective ridge, and a plot of the optimization function of the convective ridge, in accordance with the present invention.

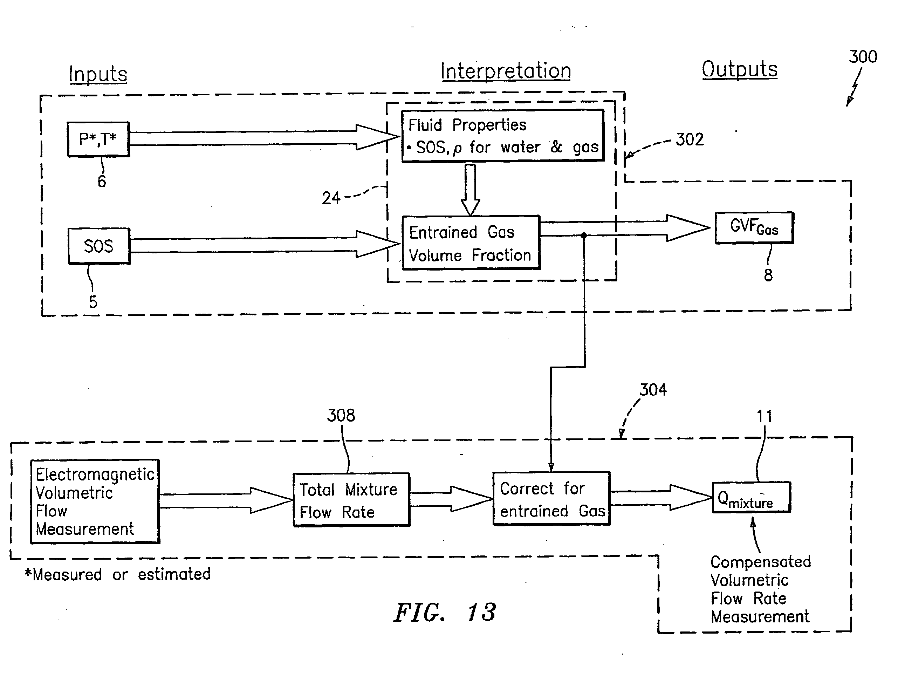

Fig. 13 is a functional flow diagram of an apparatus embodying the present invention that compensates the volumetric flow measurement of an electromagnetic flow meter, in accordance with the present invention.

Fig. 14 is a functional flow diagram of an apparatus embodying the present invention that compensates the consistency measurement of a consistency meter, in accordance with the present invention.

Figs. 15 - 17 are configurations for an apparatus in accordance with the present invention.

Figs. 18 - 20 are plots of the output of an apparatus embodying the present invention for compensating a microwave consistency meter, in accordance with the present invention.

## Best Mode for Carrying Out the Invention

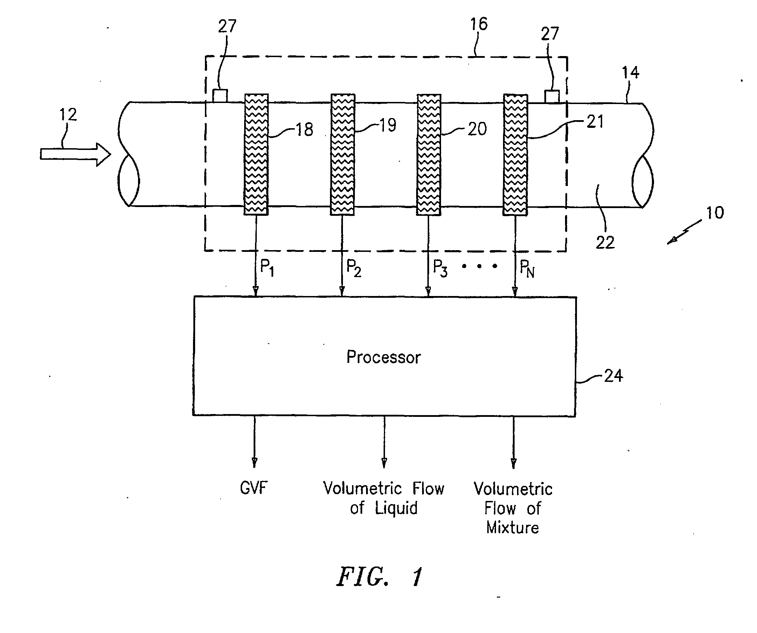

Referring to Fig. 1, an apparatus, generally shown as 10, is provided to measure volumetric flow rate and gas volume fraction in liquids and mixtures (e.g. paper and pulp slurries or other solid liquid mixtures) having entrained gas therein (including air). The apparatus 10 in accordance with the present invention determines the speed at which sound propagates within a pipe14 to measure entrained gas in liquids and/or mixtures 12. To simplify the explanation of the present invention the flow propagating through the pipe will be referred to as a mixture or slurry with the understanding that the flow may be a liquid or any other mixture having entrained gas therein.

The following approach may be used with any technique that measures the sound speed of a fluid. However, it is particularly synergistic with sonar based volumetric flow meters such as described in U.S Patent Application, Serial No. (Cidra's Docket No. CC-0122A) and U.S. Patent Application, Serial No. 09/729,994 (Cidra's Docket No. CC-0297), filed December 4, 200, now US6,609,069, in that the sound speed measurement, and thus gas volume fraction measurement, can be accomplished using the same hardware as that required for the volumetric flow measurement. It should be noted, however, that the gas volume fraction measurement could be performed independently of a volumetric flow measurement, and would have utility as an important process measurement in isolation or in conjunction with other process measurements, which will be described in greater detail hereinafter.

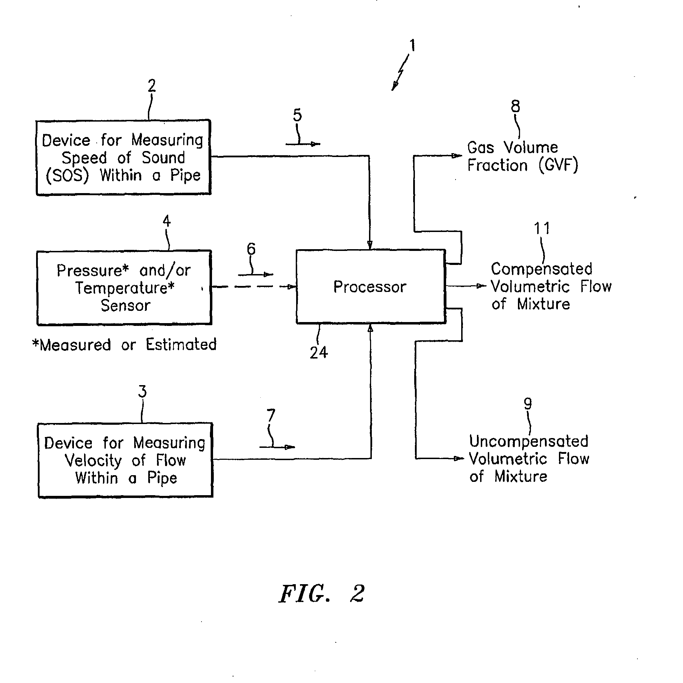

Fig. 2 is a block diagram 1 of the apparatus 10 of Fig. 1 that includes a device 2 for measuring the speed of sound (SOS) propagating within a pipe 14 and a device 3 for measuring the velocity of the mixture 12 within the pipe 14. A pressure sensor and/or temperature sensor 4 measures the pressure and/or temperature of the mixture flowing through the pipe. Alternatively, the pressure and/or temperature may be estimated rather than actually measured. In response to the speed of sound signal 5, the velocity 7 of the flow 12 and characteristics 6 of the flow (e.g., pressure and temperature), a processor 24 determines the gas volume fraction (GVF) of the flow 12, the uncompensated volumetric flow 9 of the mixture, and the volumetric flow 11 of the flow compensated for the entrained air therein.

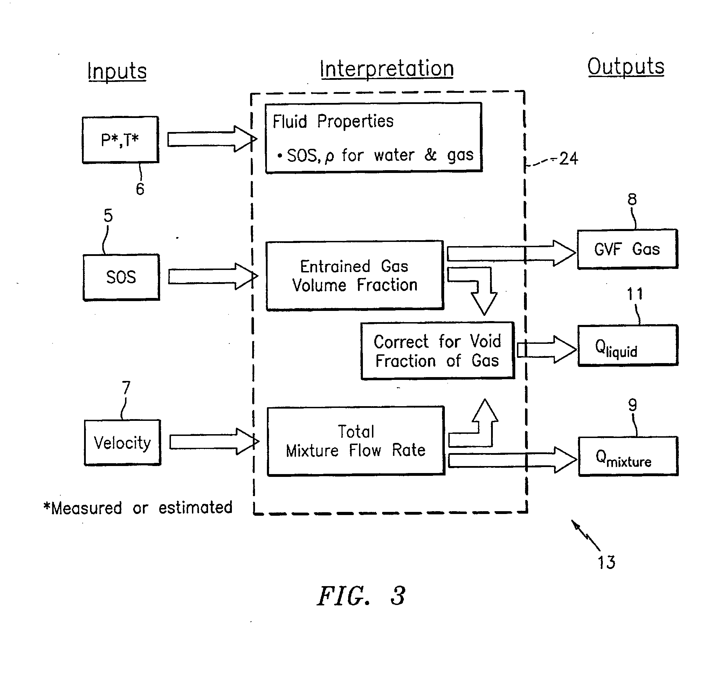

A flow chart 13 shown in Fig. 3 illustrates the function of the processor 24. As shown in Fig. 2, the inputs to the processor includes the speed of sound (SOS) within the pipe 14, the velocity of the mixture 12, and the pressure and temperature of the mixture. The fluid properties of the mixture (e.g., SOS and density) are determined knowing the pressure and temperature of the mixture. The gas volume fraction of the mixture (GVF) is determined using the SOS measurement and fluid properties, which will be described in greater detail hereinafter. The volumetric flow rate of the mixture (including the entrained gas) is determined using the velocity and knowing the cross-sectional area of the inner diameter of the pipe. The processor 24 provides a compensated volumetric flow measurement of the mixture by correcting the uncompensated volumetric flow rate using the void fraction of the air. For example, correction for void fraction of gas may be as follows, for a no slip, homogeneous flow model:

$$\text{Qair} + \text{Qliquid} = \text{Qmix}$$

$$\text{Qair} = \text{GVFair} * \text{Q mix}$$

$$\text{Qliquid} = (1\text{-GVFair}) \text{ Qmix}$$

Other models and corrections may be used to correct for gas volume fraction.

Other information relating to the gas volume fraction in a fluid and the speed of sound (or sonic velocity) in the fluid, is described in "Fluid Mechanics and Measurements in two-phase flow Systems", Institution of mechanical engineers, proceedings 1969-1970 Vol. 184 part 3C, Sept. 24-25 1969, Birdcage Walk, Westminster, London S.W. 1, England.

Fig. 1 illustrates a schematic drawing of an embodiment of the present invention. The apparatus 10 includes a sensing device 16 comprising an array of pressure sensors (or transducers) 18-21 spaced axially along the outer surface 22 of a pipe 14, having a process flow propagating therein. The pressure sensors measure the unsteady pressures produced by acoustical and vortical disturbances within the pipe, which are indicative of the SOS propagating through the pipe and the velocity of the mixture 12. The output signals ($P_1$-$P_N$) of the pressure sensors 18-21 are provided to the processor 24, which processes the pressure measurement data and determines gas volume fraction (GVF), the uncompensated volumetric flow rate and the compensated volumetric flow rate, as described hereinbefore.

In an embodiment of the present invention shown in Fig. 1, the apparatus 10 has at least four pressure sensors 18-21 disposed axially along the pipe 14 for measuring the unsteady pressure $P_1$-$P_N$ of the mixture 12 flowing therethrough.. Both measurement are derive by interpreting the unsteady pressure field within the process piping using multiple transducers displaced axially over ~ 2 diameters in length. The flow measurements can be performed using ported pressure transducers or clamp-on, strain-based sensors.

The apparatus 10 has the ability to measure the gas volume fraction and volumetric flow rate using one or both of the following techniques described herein below:

1) Determining the speed of sound of acoustical disturbances or sound waves propagating through the flow 12 using the array of pressure sensors 18-21, and/or

2) Determining the velocity of vortical disturbances or "eddies" propagating through the flow 12 using the array of pressure sensors 18-21.

Generally, the first technique measures unsteady pressures created by acoustical disturbances propagating through the flow 12 to determine the speed of sound (SOS) propagating through the flow. Knowing the pressure and/or temperature of the flow and the speed of sound of the acoustical disturbances, the processing unit 24 can determine the gas volume fraction of the mixture, as described and shown in Fig 3.

The apparatus in Fig. 1 also contemplates providing one or more acoustic sources 27 to enable the measurement of the speed of sound propagating through the flow for instances of acoustically quiet flow. The acoustic sources may be disposed at the input end of output end of the array of sensors 18-21, or at both ends as shown. One should appreciate that in most instances the acoustics sources are not necessary and the apparatus passively detects the acoustic ridge provided in the flow 12. The passive noise includes noise generated by pumps, valves, motors, and the turbulent mixture itself.

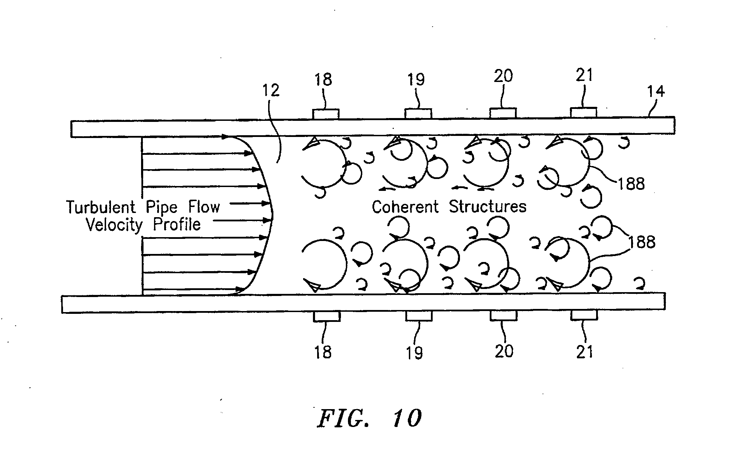

The second technique measures the velocities associated with unsteady flow fields and/or pressure disturbances created by vortical disturbances or "eddies" 118 to determine the velocity of the flow 12. The pressure sensors 18-21 measure the unsteady pressures $P_1$-$P_N$ created by the vortical disturbances as these disturbances convect within the flow 12 through the pipe 14 in a known manner, as shown in Fig. 10. Therefore, the velocity of these vortical disturbances is related to the velocity of the mixture and hence the volumetric flow rate may be determined, as will be described in greater detail hereinafter.

In one embodiment of the present invention as shown in Fig. 1, each of the pressure sensors 18-21 may include a piezoelectric film sensor to measure the unsteady pressures of the mixture 12 using either technique described hereinbefore.

The piezoelectric film sensors include a piezoelectric material or film to generate an electrical signal proportional to the degree that the material is mechanically deformed or stressed. The piezoelectric sensing element is typically conformed to allow complete or nearly complete circumferential measurement of induced strain to provide a circumferential-averaged pressure signal. The sensors can be formed from PVDF films, copolymer films, or flexible PZT sensors, similar to that described in "Piezo Film Sensors Technical Manual" provided by Measurement Specialties, Inc. A piezoelectric film sensor that may be used for the present invention is part number 1-1002405-0, LDT4-028K, manufactured by Measurement Specialties, Inc.

Piezoelectric film ("piezofilm"), like piezoelectric material, is a dynamic material that develops an electrical charge proportional to a change in mechanical stress. Consequently, the piezoelectric material measures the strain induced within the pipe 14 due to unsteady pressure variations (e.g., vortical and/or acoustical) within the process mixture 12. Strain within the pipe is transduced to an output voltage or current by the attached piezoelectric sensor. The piezoelectrical material or film may be formed of a polymer, such as polarized fluoropolymer, polyvinylidene fluoride (PVDF). The piezoelectric film sensors are similar to that described in U.S. Patent Application Serial No. (CiDRA Docket No. CC-0676).

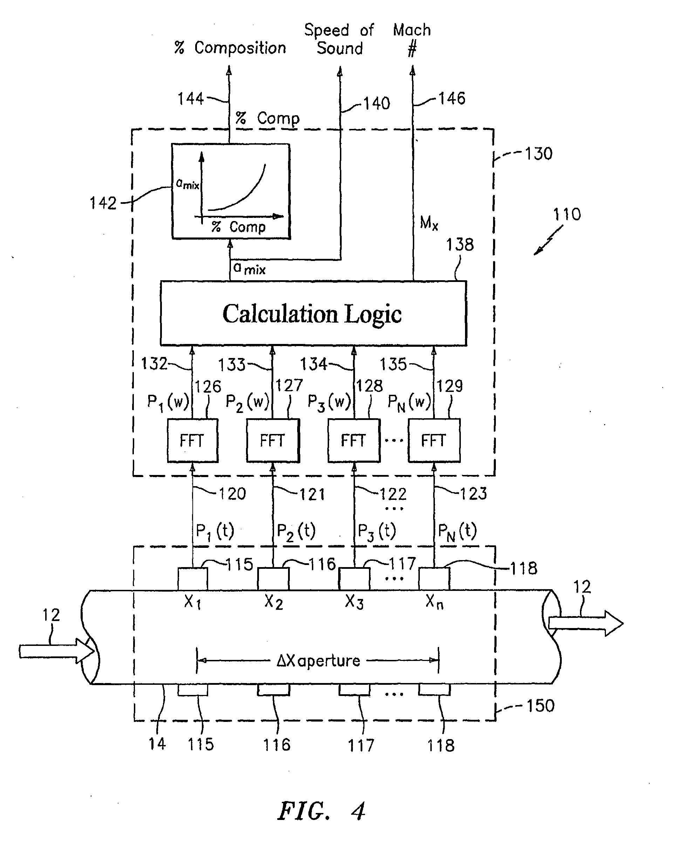

The apparatus 10 of the present invention may be configured and programmed to measure and process the detected unsteady pressures $P_1(t)$ - $P_N(t)$ created by acoustic waves and/or vortical disturbances, respectively, propagating through the mixture to determine the SOS within the pipe 14 and the velocity of the mixture 12. One such apparatus 110 is shown in Fig. 4 that measures the speed of sound (SOS) of one-dimensional sound waves propagating through the mixture to determine the gas volume fraction of the mixture. It is known that sound propagates through various mediums at various speeds in such fields as SONAR and RADAR fields. The speed of sound propagating through the pipe and mixture 12 may be determined using a number of known techniques, such as those set forth in U.S. Patent Application Serial No. 09/344,094, entitled "Fluid Parameter Measurement in Pipes Using Acoustic Pressures", filed June 25, 1999, now US 6,354,147; U.S. Patent Application Serial No. 09/729,994, filed December 4, 2002, now US 6,609,069; U.S. Patent Application Serial No. 09/997,221, filed November 28, 2001, now US 6,587,798; and U.S. Patent Application Serial No. 10/007,749, entitled "Fluid Parameter Measurement in Pipes Using Acoustic Pressures", filed November 7, 2001.

In accordance with the present invention, the speed of sound propagating through the mixture 12 is measured by passively listening to the flow with an array of unsteady pressure sensors to determine the speed at which one-dimensional compression waves propagate through the mixture 12 contained within the pipe 14.

As shown in Fig. 4, the apparatus 110 has an array of at least three acoustic pressure sensors 115,116,117, located at three locations $x_1, x_2, x_3$ axially along the pipe 14. One will appreciate that the sensor array may include more than three pressure sensors as depicted by pressure sensor 118 at location $x_N$. The pressure generated by the acoustic waves may be measured through pressure sensors 115 - 118. The pressure sensors 15 - 18 provide pressure time-varying signals $P_1(t), P_2(t), P_3(t), P_N(t)$ on lines 120,121,122,123 to a signal processing unit 130 to known Fast Fourier Transform (FFT) logics 126,127,128,129, respectively. The FFT logics 126 - 129 calculate the Fourier transform of the time-based input signals $P_1(t) - P_N(t)$ and provide complex frequency domain (or frequency based) signals $P_1(\omega), P_2(\omega), P_3(\omega), P_N(\omega)$ on lines 132,133,134,135 indicative of the frequency content of the input signals. Instead of FFT's, any other technique for obtaining the frequency domain characteristics of the signals $P_1(t) - P_N(t)$, may be used. For example, the cross-spectral density and the power spectral density may be used to form a frequency domain transfer functions (or frequency response or ratios) discussed hereinafter.

The frequency signals $P_1(\omega) - P_N(\omega)$ are fed to $a_{mix}$-Mx Calculation Logic 138 which provides a signal to line 40 indicative of the speed of sound of the mixture $a_{mix}$ (discussed more hereinafter). The $a_{mix}$ signal is provided to map (or equation) logic 142, which converts $a_{mix}$ to a percent composition of a mixture and provides a %Comp signal to line 44 indicative thereof (as discussed hereinafter).

More specifically, for planar one-dimensional acoustic waves in a homogenous mixture, it is known that the acoustic pressure field P(x,t) at a location x along the pipe 14, where the wavelength $\lambda$ of the acoustic waves to be measured is long compared to the diameter d of the pipe 14 (i.e., $\lambda/d >> 1$), may be expressed as a superposition of a right traveling wave and a left traveling wave, as follows:

$$P(x,t) = \left( Ae^{-ik_r x} + Be^{+ik_l x} \right) e^{i\omega t} \qquad \text{Eq. 1}$$

where A,B are the frequency-based complex amplitudes of the right and left traveling waves, respectively, x is the pressure measurement location along a pipe 14, $\omega$ is frequency (in rad/sec, where $\omega = 2\pi f$), and $k_r, k_1$ are wave numbers for the right and left traveling waves, respectively, which are defined as:

$$k_r \equiv \left( \frac{\omega}{a_{mix}} \right) \frac{1}{1 + M_x} \quad \text{and} \quad k_l \equiv \left( \frac{\omega}{a_{mix}} \right) \frac{1}{1 - M_x} \qquad \text{Eq. 2}$$

where $a_{mix}$ is the speed of sound of the mixture in the pipe, $\omega$ is frequency (in rad/sec), and $M_x$ is the axial Mach number of the flow of the mixture within the pipe, where:

$$M_x \equiv \frac{V_{mix}}{a_{mix}} \qquad \text{Eq. 3}$$

where Vmix is the axial velocity of the mixture. For non-homogenous mixtures, the axial Mach number represents the average velocity of the mixture and the low frequency acoustic field description remains substantially unaltered.

The data from the array of sensors 115-118 may be processed in any domain, including the frequency/spatial domain, the temporal/spatial domain, the temporal/wavenumber domain or the wave-number/frequency (k-$\omega$) domain. As such, any known array processing technique in any of these or other related domains may be used if desired, similar to the techniques used in the fields of SONAR and RADAR.

Also, some or all of the functions within the processor 130 may be implemented in software (using a microprocessor or computer) and/or firmware, or may be implemented using analog and/or digital hardware, having sufficient memory, interfaces, and capacity to perform the functions described herein.

Acoustic pressure sensors 115 - 118 sense acoustic pressure signals that, as measured, are lower frequency (and longer wavelength) signals than those used for ultrasonic probes of the prior art, and thus the current invention is more tolerant to inhomogeneities in the flow, such as time and space domain inhomogeneities within the flow.

It is within the scope of the present invention that the pressure sensor spacing may be known or arbitrary and that as few as two sensors are required if certain information is known about the acoustic properties of the process flow 12. The pressure sensors are spaced sufficiently such that the entire length of the array (aperture) is at least a significant fraction of the measured wavelength of the acoustic waves being measured. The acoustic wavelength is a function of the type or characteristics of flow 12.

Based on the above discussion, one may use a short length scale aperture to measure the sound speed.

The characteristic acoustic length scale is: $\lambda = c/f$; where c is the speed of sound in a mixture, f is frequency and $\lambda$ is wavelength.

If Aperture = L and if $L/\lambda$ is approx. constant.

$$\text{Then } L_{water}/\lambda_{water} = L_{water} * f/C_{water} \approx L_{GVF} * f/c_{GVF}$$

Therefore: $L_{GVF} = L_{water} (C_{GVF}/C_{water})$; where GVF is gas volume fraction.

Thus for SOS of water ($C_{water}$ = 5,000 ft/sec), and SOS of the Gas volume fraction ($C_{GVF}$ = 500 ft/sec) and a length aperture of $L_{water}$ = 5ft (which we have shown is sufficient to accurately measure the SOS of water), the length aperture for a gas volume fraction $L_{GVF}$ would be about 0.5 feet.

The sound speed of a mixture can be related to volumetric phase fraction ($\phi_i$) of the components and the sound speed (a) and densities (ρ) of the component through the Wood equation.

$$\frac{1}{\rho_{mix} a^2_{mix_\infty}} = \sum_{i=1}^{N} \frac{\phi_i}{\rho_i a_i^2} \qquad \text{where} \quad \rho_{mix} = \sum_{i=1}^{N} \rho_i \phi_i$$

One dimensional compression waves propagating within a mixture 12 contained within a pipe 14 exert an unsteady internal pressure loading on the pipe. The degree to which the pipe displaces as a result of the unsteady pressure loading influences the speed of propagation of the compression wave. The relationship among the infinite domain speed of sound and density of a mixture; the elastic modulus (E), thickness (t), and radius (R) of a vacuum-backed cylindrical conduit; and the effective propagation velocity ($a_{eff}$) for one dimensional compression is given by the following expression:

$$a_{eff} = \frac{1}{\sqrt{1/a^2_{mix_\infty} + \rho_{mix} \frac{2R}{Et}}} \quad \text{(eq 1)}$$

Note: "vacuum backed" as used herein refers to a situation in which the fluid surrounding the pipe externally has negligible acoustic impedance compared to that of the mixture internal to the pipe 14. For example, meter containing a typical water and pulp slurry immersed in air at standard atmospheric conditions satisfies this condition and can be considered "vacuum-backed".

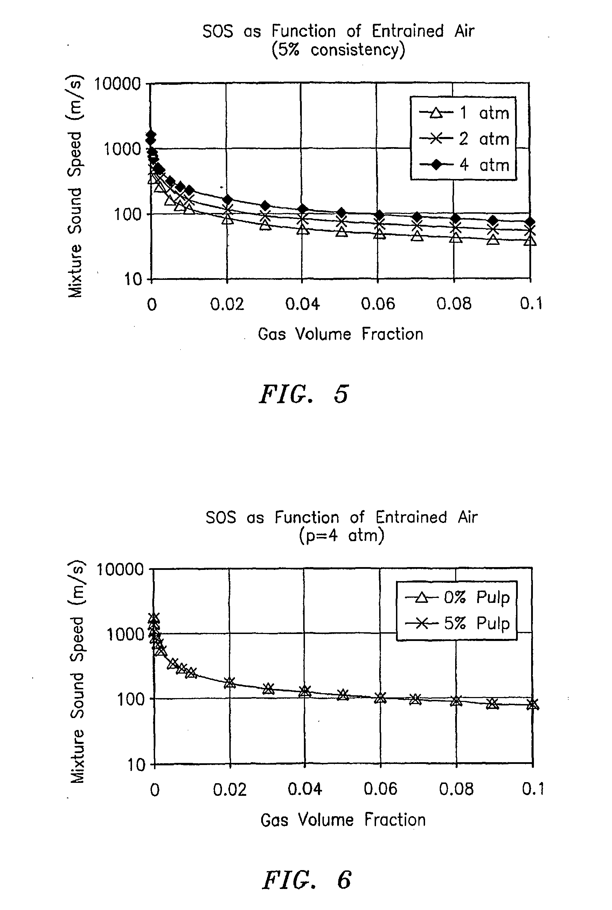

The mixing rule essentially states that the compressibility of a mixture ($1/(\rho a^2)$) is the volumetrically-weighted average of the compressibilities of the components. For gas / liquid mixtures 12 at pressure and temperatures typical of paper and pulp industry, the compressibility of gas phase is orders of magnitudes greater than that of the liquid. Thus, the compressibility of the gas phase and the density of the liquid phase primarily determine mixture sound speed., and as such, it is necessary to have a good estimate of process pressure to interpret mixture sound speed in terms of volumetric fraction of entrained air. The effect of process pressure on the relationship between sound speed and entrained air volume fraction is shown in Fig. 5.

Conversely, however, detailed knowledge of the liquid / slurry is not required for entrained air measurement. Variations in liquid density and compressibility with changes in consistency have a negligible effect on mixture sound speed compared to the presence of entrained air. Fig. 6 shows the mixture sound speed as a function of entrained air volume fraction for two slurries, one with 0% wood fiber and the other with 5% wood fiber by volume. As shown, the relationship between mixture sound speed and gas volume fraction is essentially indistinguishable for the two slurries. Furthermore, mixture sound speed is shown to an excellent indicator of gas volume fraction, especially for the trace to moderate amounts of entrained air, from 0 to 5% by volume, typically encountered in the paper and pulp industry.

For paper and pulp slurries, the conditions are such that for slurries with non-negligible amounts of entrained gas, say < 0.01%, the compliance of standard industrial piping (Schedule 10 or 40 steel pipe) is typically negligible compared to that of the entrained air.

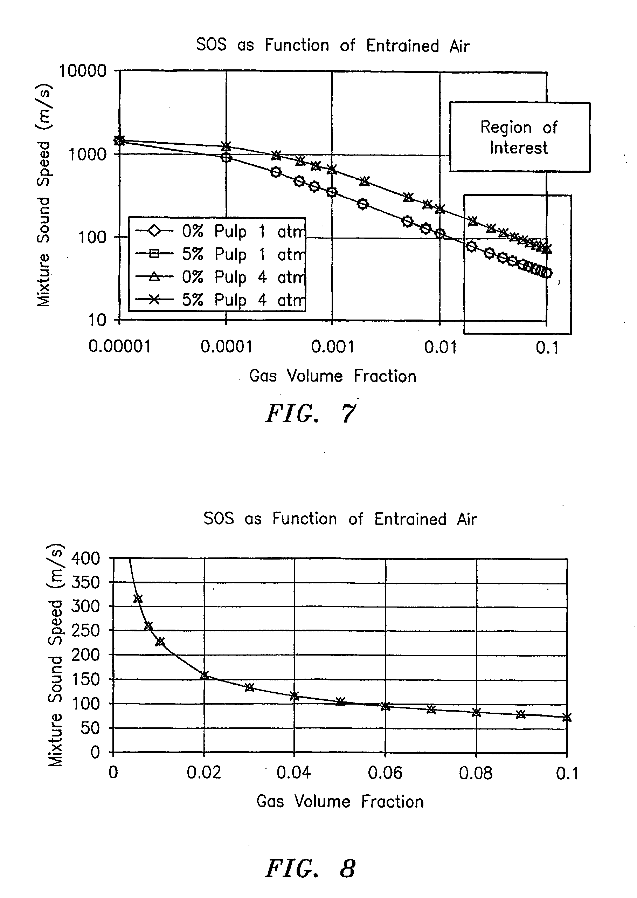

Figs. 7 and 8 above show the relationship between sound speed and entrained air for slurries 12 with pulp contents representative of the range used in the paper and pulp industry. Referring to Fig. 7, two slurry consistencies are shown; representing the lower limit, a pure water mixture is considered, and representing the higher end of consistencies, a 5% pulp / 95% water slurry is considered. Since the effect of entrained air on the sound speed of the mixture is highly sensitive to the compressibility of the entrained air, the effect of the entrained air is examined at two pressures, one at ambient representing the lower limit of pressure, and one at 4 atmospheres representing a typical line pressure in a paper process. As shown, the consistency of the liquid slurry 12, i.e., the pulp content, has little effect on the relationship between entrained air volume fraction and mixture sound speed. This indicates that an entrained air measurement could be accurately performed, within 0.01% or so, with little or no knowledge of the consistency of the slurry. The chart does show a strong dependence on line pressure. Physically, this effect is linked to the compressibility of the air, and thus, this indicates that reasonable estimates of line pressure and temperature would be required to accurately interpret mixture sound speed in terms of entrained air gas volume fraction.

Fig. 7 also shows that for the region of interest, from roughly 1% entrained air to roughly 5% entrained air, mixture sound speeds ($a_{mix}$) are quite low compare to the liquid-only sound speeds. In this example, the sound speed of the pure water and the 5% pulp slurry were calculated, based on reasonable estimates of the constituent densities and compressibilities, to be 1524 m/s and 1541 m/s, respectively. The sound speed of these mixtures with 1% to 5% entrained air at typical operating pressure (1atm to 4 atms) are on the order of 100 m/sec. The implication of these low sound speed is that the mixture sound speed could be accurately determined with a array of sensors, ie using the methodology described in aforementioned U. S Patent Applications, Serial No. (Cidra's Docket No. CC-0066A), and/or Serial No. (Cidra's Docket No. CC-0066B), with an aperture that is similar, or identical, to an array of sensors that would be suitable to determine the convection velocity, using the methodology described in aforementioned U.S Patent Application, Serial No. (Cidra's Docket No. CC-0122A). Thus, performing a volumetric flow measurement and an entrained air volumetric flow measurement using the convection velocity and mixture sound speed simultaneously, with the same sensor array would provide functionality currently unavailable to the paper and pulp industry.

As mentioned earlier, the relationship between mixture sound speed and entrained air in bubbly liquids 12 is well established. However, as will be developed below, in bubbly flows, these relations are only applicable for the propagation of relatively low frequency, long wavelength sound. While this restriction does not present any significant obstacles for the sonar meter, it does present significant challenges to ultrasonic sound speed measurement devices.

Ultrasonic meters typically operate in 100 KHz to several MHz frequency range. For these meters, entrained air bubbles have length scales on the same order as the acoustic waves generated by the ultrasonic meters. The posed several problems. Firstly, the bubbles scatter the ultrasonic waves, impairing the ability of the ultrasonic meter to perform a sound speed measurement. Also, ultrasonic meters rely on information derived from only a small fraction of the cross sectional area of the pipe to be representative of the entire cross section, an assumption that breaks down for flows with inhogenieties on the same length scale as the ultrasonic wavelength.

For the sound speed measurement, the apparatus 110 utilizes similar processing algorithms as those employed for the volumetric flow measurement. As with convective disturbances (which is described in greater detail hereinafter), the temporal and spatial frequency content of sound propagating within the process piping is related through a dispersion relationship.

$$\omega = \frac{k}{a_{mix}}$$

As before, k is the wave number, defined as $k = 2\pi/\lambda$, $\omega$ is the temporal frequency in rad/sec, and $a_{mix}$ is the speed at which sound propagates within the process piping. Unlike disturbances, which convect with the flow, however, sound generally propagates in both directions, with and against the mean flow. For these cases, the acoustic power is located along two acoustic ridges, one for the sound traveling with the flow at a speed of $a_{mix} + V_{mix}$ and one for the sound traveling against the flow at a speed of $a_{mix} - V_{mix}$.

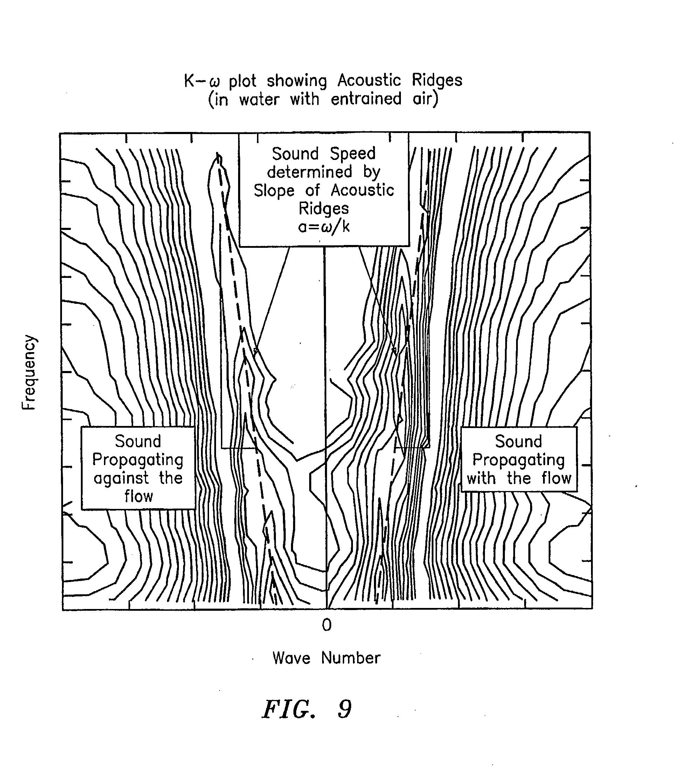

Fig. 9 shows a k-$\omega$ plot generated for acoustic sound field recorded from water flowing at a rate of 240 gpm containing ~2% entrained air by volume in a 3 in, schedule 10, stainless steel pipe. The k-ω plot was constructed using data from an array of strain-based sensors attached to the outside of the pipe. Two acoustic ridges are clearly evident. Based on the slopes of the acoustic ridges, the sound speed for this for this mixture was 330 ft/sec (100m/s), consistent with that predicted by the Wood equation. Note that adding 2% air by volume reduces the sound speed of the bubbly mixture to less than 10% of the the sound speed of single phase water.

While the sonar-based flow meter using an array of sensors to measure the speed of sound of an acoustic wave propagating through the mixture, one will appreciate that any means for measuring the speed of sound of the acoustic wave may used to determine the entrained air volume fraction of the mixture/fluid.

The apparatus 110 further includes the ability to measure of volumetric flow rate of the mixture by comparing the difference of the speed of one dimensional sound waves propagating with and against the mean flow.

This method of determining the volumetric flow rate of the flow 12 relies on the interaction of the mean flow with the acoustic pressure field. The interaction results in sound waves propagating with the mean flow traveling at the speed of sound (if the vapor/liquid mixture were not flowing) plus the convection velocity and, conversely, sound waves traveling against the mean flow propagating at the speed of sound minus the convection velocity. That is,

$$a_R = a_{mix} + u$$

$$a_L = a_{mix} - u$$

where $a_R$ = velocity of a right traveling acoustic wave relative to a stationary observer (i.e. the tube 14), $a_L$ = velocity of a left traveling acoustic wave apparent to a stationary observer, $a_{mix}$ = speed of sound traveling through the mixture (if the mixture was not flowing) and u = the mean flow velocity (assumed to be flowing from left to right in this instance). Combining these two equations yields an equation for the mean velocity,

$$u = \frac{a_R - a_L}{2}$$

Therefore, by measuring the propagation velocity of acoustic waves in both directions relative to the pipe 14 as described hereinbefore, the mean flow velocity can be calculated by multiplying the mean flow velocity by the cross-sectional area of the pipe 14.

Further, Fig. 9 illustrates the ability of the present invention to determine the velocity of a fluid moving in a pipe. The color contours represent the relative signal power at all combinations of frequency and wavenumber. The highest power "ridges" represent the acoustic wave with slope of the ridges equal to the propagation speed. The dashed lines show the best-fit two-variable maximization of the power with the two variables being sound speed and flow velocity. The right-side ridge represents the acoustic wave traveling in the same direction as the bulk flow and therefore its slope is steeper than the left-side ridge that represents the acoustic wave traveling in the opposite direction of the flow. This indicates that the acoustic wave traveling in the same direction of the flow is traveling faster than the acoustic wave traveling in the opposite direction of the flow relative to the stationary sensors located on the probe.

As discussed hereinbefore, the apparatus 10 of Fig. 1 embodying the present invention also includes the ability to measure volumetric flow rate of the mixture by measuring the unsteady pressures generated by vortical disturbances 188 propagating in the mixture 12 (see Fig. 10). The apparatus 10 uses one or both of the following techniques to determine the convection velocity of the vortical disturbances within the process flow 12 by:

    1) Cross-correlating unsteady pressure variations using an array of unsteady pressure sensors.

    2) Characterizing the convective ridge of the vortical disturbances using an array of unsteady pressure sensors.

To measure volumetric flow, the sonar meter characterizes speed at which coherent vortical structures convect past an axial array of sensors using beam forming techniques developed over several decades for underwater acoustic application. Coherent structures are an inherent feature of turbulent boundary layers present in all turbulent flows. Unlike conventional vortex shedding meters, no internal geometry is required to generate these structures.

The overwhelming majority of industrial process flows involve turbulent flow 12. Turbulent fluctuations within the process flow govern many of the flow properties of practical interest including the pressure drop, heat transfer, and mixing. For engineering applications, considering only the time-averaged properties of turbulent flows is often sufficient for design purposes. For sonar based array processing flow metering technology, understanding the time-averaged velocity profile in turbulent flow 12 provides a means to interpret the relationship between speed at which coherent structures 118 convect and the volumetrically averaged flow rate.

Turbulent pipe flows 12 are highly complex flows. Predicting the details of any turbulent flow is problematic, however, much is known regarding the statistical properties of the flow. For instance, turbulent flows contain self-generating, coherent vortical structures often termed "turbulent eddies". The maximum length scale of these eddies is set by the diameter of the pipe 14. These structures remain coherent for several tube diameters downstream, eventually breaking down into progressively smaller eddies until the energy is dissipated by viscous effects.

Experimental investigations have established that eddies generated within turbulent boundary layers convect at roughly 80% of maximum flow velocity. For tube flows, this implies that turbulent eddies will convect at approximately the volumetrically averaged flow velocity within the pipe 14. The precise relationship between the convection speed of turbulent eddies and the flow rate for each class of meters can be calibrated empirically as described below.

Fig. 10 illustrates the relevant flow features of turbulent pipe flow 12 along with a axial array of sensors 18-21. As shown, the time-averaged axial velocity is a function of radial position, from zero the wall to a maximum at the centerline of the pipe. The flow 12 near the wall is characterized by steep velocity gradients and transitions to relatively uniform core flow near the center of the pipe 14. Vortical structures, often termed turbulent eddies, are superimposed over time averaged velocity profile. These coherent structures contain temporally and spatially random fluctuations with magnitudes typically less than 10% percent of the mean flow velocity and are carried along with the mean flow. Experimental investigations have established that eddies generated within turbulent boundary layers remain coherent for several pipe diameters and convect at roughly 80% of maximum flow velocity (Schlichting, 1979).

From a volumetric flow measurement perspective, the volumetrically averaged flow velocity is of interest. The volumetrically averaged flow velocity, defined as the total volumetric flow rate, Q, divided by the cross sectional area of the conduit, A, is a useful, but arbitrarily defined property of the flow. In fact, given the velocity profile within the pipe, little flow is actually moving at this speed. The precise relationship between the convection speed of turbulent eddies and the flow rate is determined experimentally through calibration for each.

The Reynolds number (Re), based on pipe diameter (D), characterizes many of the engineering properties of the flow. The Reynolds number is a non-dimensional ratio representing the relative importance of inertial forces to viscous forces within a flow:

$$\mathrm{Re} = \frac{inertial}{viscous}\, forces = \frac{\rho u \dfrac{\partial u}{\partial x}}{\mu \dfrac{\partial^2 u}{\partial y^2}} = \frac{UD}{v}$$

Where p is the fluid density, $\mu$ is the dynamic viscosity, U is the volumetrically averaged flow velocity and v (= $\mu$ /p) is the kinematic viscosity.

The critical Reynolds number for pipe flows, above which flows are considered turbulent, is ~2300. Most flows in the paper and pulp industry have Reynolds number ranging from one hundred thousand to several million, well within the turbulent regime. In addition to demarcating a boundary between laminar and turbulent flow regimes, the Reynolds number is a similarity parameter for pipe flows, i.e, flows in geometrically similar pipes with the same Reynolds number are dynamically similar (Schlichting p. 12).

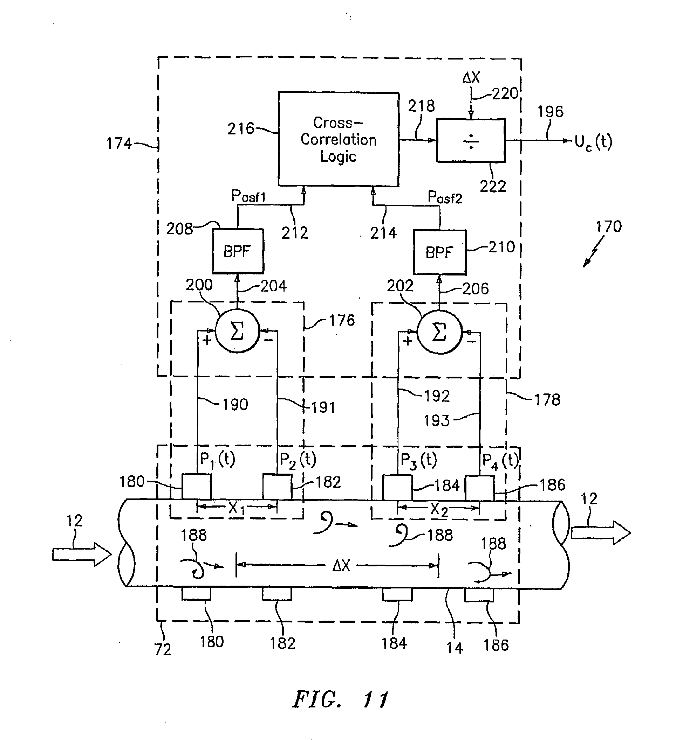

The apparatus 170 of Fig. 11 determines the convection velocity of the vortical disturbances within the flow by cross correlating unsteady pressure variations using an array of unsteady pressure sensors, similar to that shown in U.S. Patent Application Serial No. 10/007,736, filed November 8, 2001, entitled "Flow Rate Measurement Using Unsteady Pressures".

Referring to Fig. 11, the apparatus 170 includes a sensing section 172 along a pipe 14 and a signal processing unit 174. The pipe 14 has two measurement regions 176,178 located a distance $\Delta X$ apart along the pipe 14. At the first measurement region 176 are two unsteady (or dynamic or ac) pressure sensors 180,182, located a distance $X_1$ apart, capable of measuring the unsteady pressure in the pipe 14, and at the second measurement region 178, are two other unsteady pressure sensors 84,86, located a distance $X_2$ apart, capable of measuring the unsteady pressure in the pipe 14. Each pair of pressure sensors 180,182 and 184,186 act as spatial filters to remove certain acoustic signals from the unsteady pressure signals, and the distances $X_1, X_2$ are determined by the desired filtering characteristic for each spatial filter, as discussed hereinafter.

The apparatus 170 of the present invention measures velocities associated with unsteady flow fields and/or pressure disturbances represented by 188 associated therewith relating to turbulent eddies (or vortical flow fields), inhomogeneities in the flow, or any other properties of the flow, liquid, vapor, or pressure, having time varying or stochastic properties that are manifested at least in part in the form of unsteady pressures. The vortical flow fields are generated within the flow of the pipe 14 by a variety of non-discrete sources such as remote machinery, pumps, valves, elbows, as well as the fluid or mixture flow itself. It is this last source, the fluid flowing within the pipe, that is a generic source of vortical flow fields primarily caused by the shear forces between the flow 12 and the wall of the tube that assures a minimum level of disturbances for which the present invention takes unique advantage. The flow generated vortical flow fields generally increase with mean flow velocity and do not occur at any predeterminable frequency. As such, no external discrete vortex-generating source is required within the present invention and thus may operate using passive detection. It is within the scope of the present that the pressure sensor spacing may be known or arbitrary and that as few as two sensors are required if certain information is known about the acoustic properties of the system as will be more fully described herein below.

The vortical flow fields 188 are, in general, comprised of pressure disturbances having a wide variation in length scales and which have a variety of coherence length scales such as that described in the reference "Sound and Sources of Sound", A. P.Dowling et al, Halsted Press, 1983. Certain of these vortical flow fields 188 convect at or near, or related to the mean velocity of at least one of the elements within a mixture flowing through the pipe 14. The vortical pressure disturbances 188 that contain information regarding convection velocity have temporal and spatial length scales as well as coherence length scales that differ from other disturbances in the flow. The present invention utilizes these properties to preferentially select disturbances of a desired axial length scale and coherence length scale as will be more fully described hereinafter. For illustrative purposes, the terms vortical flow field and vortical pressure field will be used to describe the above-described group of unsteady pressure fields having temporal and spatial length and coherence scales described herein.

Also, some or all of the functions within the signal processing unit 174 may be implemented in software (using a microprocessor or computer) and/or firmware, or may be implemented using analog and/or digital hardware, having sufficient memory, interfaces, and capacity to perform the functions described herein.

In particular, in the processing unit 174, the pressure signal $P_1(t)$ on the line 190 is provided to a positive input of a summer 200 and the pressure signal $P_2(t)$ on the line 191 is provided to a negative input of the summer 200. The output of the summer 200 is provided to line 204 indicative of the difference between the two pressure signals $P_1,P_2$ (e.g., $P_1-P_2=P_{as1}$).

The pressure sensors 180,182 together with the summer 200 create a spatial filter 176. The line 204 is fed to bandpass filter 208, which passes a predetermined passband of frequencies and attenuates frequencies outside the passband. In accordance with the present invention, the passband of the filter 208 is set to filter out (or attenuate) the dc portion and the high frequency portion of the input signals and to pass the frequencies therebetween. Other passbands may be used in other embodiments, if desired. Passband filter 208 provides a filtered signal $P_{asf}1$ on a line 212 to Cross-Correlation Logic 216, described hereinafter.

The pressure signal $P_3(t)$ on the line 192 is provided to a positive input of a summer 202 and the pressure signal $P_4(t)$ on the line 193 is provided to a negative input of the summer 202. The pressure sensors 83,84 together with the summer 202 create a spatial filter 178. The output of the summer 202 is provided on a line 206 indicative of the difference between the two pressure signals $P_3,P_4$ (e.g., $P_3-P_4= P_{as2}$). The line 206 is fed to a bandpass filter 210, similar to the bandpass filter 108 discussed hereinbefore, which passes frequencies within the passband and attenuates frequencies outside the passband. The filter 210 provides a filtered signal $P_{asf}2$ on a line 214 to the Cross-Correlation Logic 216. The signs on the summers 200,202 may be swapped if desired, provided the signs of both summers are swapped together. In addition, the pressure signals $P_1,P_2,P_3,P_4$ may be scaled prior to presentation to the summers 200,202.

The Cross-Correlation Logic 216 calculates a known time domain cross-correlation between the signals $P_{asf1}$ and $P_{asf2}$ on the lines 212,214, respectively, and provides an output signal on a line 218 indicative of the time delay $\tau$ it takes for an vortical flow field 188 (or vortex, stochastic, or vortical structure, field, disturbance or perturbation within the flow) to propagate from one sensing region 176 to the other sensing region 178. Such vortical flow disturbances, as is known, are coherent dynamic conditions that can occur in the flow which substantially decay (by a predetermined amount) over a predetermined distance (or coherence length) and convect (or flow) at or near the average velocity of the fluid flow. As described above, the vortical flow field 188 also has a stochastic or vortical pressure disturbance associated with it. In general, the vortical flow disturbances 188 are distributed throughout the flow, particularly in high shear regions, such as boundary layers (e.g., along the inner wall of the tube 14) and are shown herein as discrete vortical flow fields 188. Because the vortical flow fields (and the associated pressure disturbance) convect at or near the mean flow velocity, the propagation time delay $\tau$ is related to the velocity of the flow by the distance $\Delta X$ between the measurement regions 176,178, as discussed hereinafter.

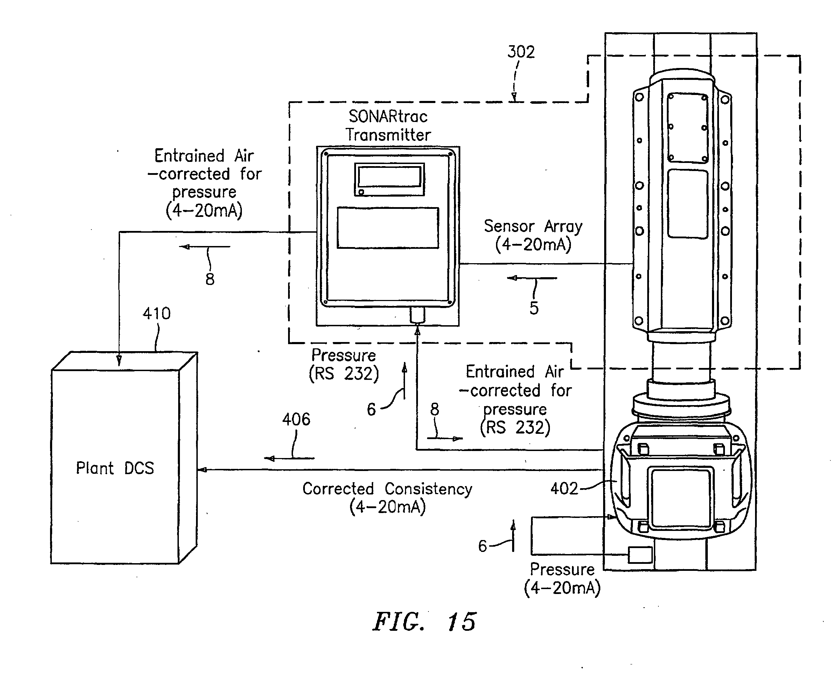

Referring to Fig. 15, a spacing signal $\Delta X$ on a line 220 indicative of the distance $\Delta X$ between the sensing regions 176,178 is divided by the time delay signal $\tau$ on the line 218 by a divider 222 which provides an output signal on the line 196 indicative of the convection velocity $U_c(t)$ of the saturated vapor/liquid mixture flowing in the pipe 14, which is related to (or proportional to or approximately equal to) the average (or mean) flow velocity $U_f(t)$ of the flow 12, as defined below:

$$U_c(t) = \Delta X / \tau \propto U_f(t) \qquad\qquad \text{Eq. 1}$$

The present invention uses temporal and spatial filtering to precondition the pressure signals to effectively filter out the acoustic pressure disturbances $P_{acoustic}$ and other long wavelength (compared to the sensor spacing) pressure disturbances in the tube 14 at the two sensing regions 176,178 and retain a substantial portion of the vortical pressure disturbances $P_{vortical}$ associated with the vortical flow field 188 and any other short wavelength (compared to the sensor spacing) low frequency pressure disturbances $P_{other}$. In accordance with the present invention, if the low frequency pressure disturbances $P_{other}$ are small, they will not substantially impair the measurement accuracy of $P_{vortical}$.

The second technique of determining the convection velocity of the vortical disturbances within the flow 12 is by characterizing the convective ridge of the vortical disturbances using an array of unsteady pressure sensors, similar to that shown in U.S. Patent Application Serial No. 09/729,994, filed December 4, 2000, entitled "Method and Apparatus for Determining the Flow Velocity Within a Pipe".

The sonar flow metering methodology uses the convection velocity of coherent structure with turbulent pipe flows 12 to determine the volumetric flow rate. The convection velocity of these eddies 188 is determined by applying sonar arraying processing techniques to determine the speed at which the eddies convect past an axial array of unsteady pressure measurements distributed along the pipe 14.

The sonar-based algorithms determine the speed of the eddies 188 by characterizing both the temporal and spatially frequency characteristics of the flow field. For a series of coherent eddies convecting past a fixed array of sensors, the temporal and spatial frequency content of pressure fluctuations are related through the following relationship:

$$\omega = \frac{k}{U_{convect}}$$

Here k is the wave number, defined as $k=2\pi/\lambda$ and has units of 1/length, $\omega$ is the temporal frequency in rad/sec, and $U_{convect}$ is the convection velocity. Thus, the shorter the wavelength (larger k) is, the higher the temporal frequency.

In sonar array processing, the spatial / temporal frequency content of time stationary sound fields are often displayed using "k-$\omega$ plots". K-$\omega$ plots are essentially three-dimensional power spectra in which the power of a sound field is decomposed into bins corresponding to specific spatial wave numbers and temporal frequencies. On a k-$\omega$ plot, the power associated with a pressure field convecting with the flow is distributed in regions, which satisfies the dispersion relationship developed above. This region is termed "the convective ridge" (Beranek, 1992) and the slope of this ridge on a k-w plot indicates the convective velocity of the pressure field. This suggests that the convective velocity of turbulent eddies, and hence flow rate within a tube, can be determined by constructing a k-$\omega$ plot from the output of a phased array of sensor and identifying the slope of the convective ridge.

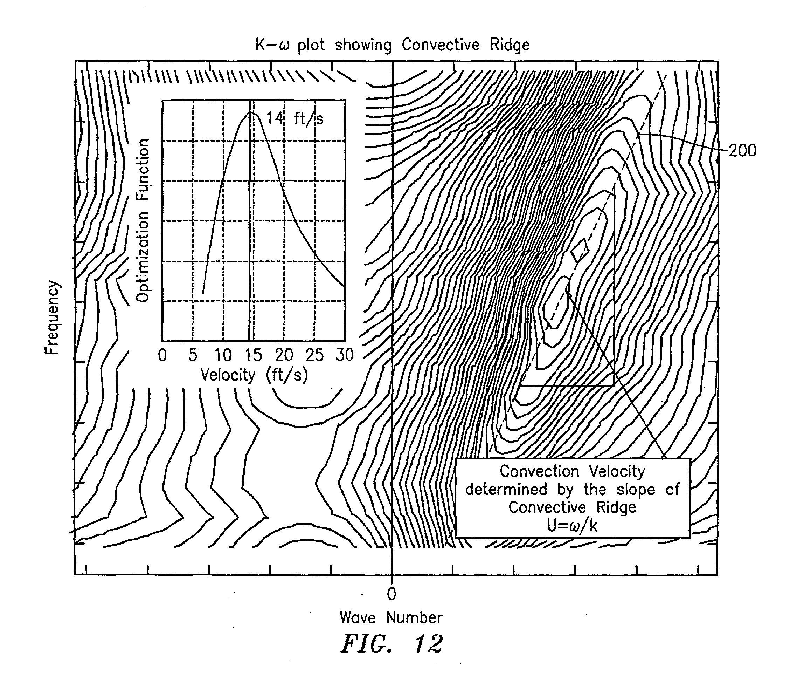

Fig. 12 shows an example of a k-$\omega$ plot generated from a phased array of pressure sensors. The power contours show a well-defined convective ridge. A parametric optimization method was used to determine the "best" line representing the slope of the convective ridge 200. For this case, a slope of 14.2 ft/sec (4.33 m/sec) was determined. The intermediate result of the optimization procedure is displayed in the insert, showing that optimized value is a unique and well-defined optima.

The k-w plot shown in Fig. 12 illustrates the fundamental principle behind sonar based flow measure, namely that axial arrays of pressure sensors can be used in conjunction with sonar processing techniques to determine the speed at which naturally occurring turbulent eddies convect within a pipe.

Another embodiment of the present invention include a pressure sensor such as pipe strain sensors, accelerometers, velocity sensors or displacement sensors, discussed hereinafter, that are mounted onto a strap to enable the pressure sensor to be clamped onto the pipe. The sensors may be removable or permanently attached via known mechanical techniques such as mechanical fastener, spring loaded, clamped, clam shell arrangement, strapping or other equivalents. These certain types of pressure sensors, it may be desirable for the pipe 12 to exhibit a certain amount of pipe compliance.

Instead of single point pressure sensors 18-21, at the axial locations along the pipe 12, two or more pressure sensors may be used around the circumference of the pipe 12 at each of the axial locations. The signals from the pressure sensors around the circumference at a given axial location may be averaged to provide a cross-sectional (or circumference) averaged unsteady acoustic pressure measurement. Other numbers of acoustic pressure sensors and annular spacing may be used. Averaging multiple annular pressure sensors reduces noises from disturbances and pipe vibrations and other sources of noise not related to the one-dimensional acoustic pressure waves in the pipe 12, thereby creating a spatial array of pressure sensors to help characterize the one-dimensional sound field within the pipe 12.

The pressure sensors 18-21 of Fig. 1 described herein may be any type of pressure sensor, capable of measuring the unsteady (or ac or dynamic) pressures within a pipe 14, such as piezoelectric, optical, capacitive, resistive (e.g., Wheatstone bridge), accelerometers (or geophones), velocity measuring devices, displacement measuring devices, etc. If optical pressure sensors are used, the sensors 18-21 may be Bragg grating based pressure sensors, such as that described in US Patent Application, Serial No. 08/925,598, entitled "High Sensitivity Fiber Optic Pressure Sensor For Use In Harsh Environments", filed Sept. 8, 1997, now U.S. Patent 6,016,702, and in US Patent Application, Serial No. 10/224,821, entitled " Non-Intrusive Fiber Optic Pressure Sensor for Measuring Unsteady Pressures within a Pipe". In an embodiment of the present invention that utilizes fiber optics as the pressure sensors 14 they may be connected individually or may be multiplexed along one or more optical fibers using wavelength division multiplexing (WDM), time division multiplexing (TDM), or any other optical multiplexing techniques.

In certain embodiments of the present invention, a piezo-electronic pressure transducer may be used as one or more of the pressure sensors 15-18 and it may measure the unsteady (or dynamic or ac) pressure variations inside the tube 14 by measuring the pressure levels inside of the tube. These sensors may be ported within the pipe to make direct contact with the mixture 12. In an embodiment of the present invention, the sensors 14 comprise pressure sensors manufactured by PCB Piezotronics. In one pressure sensor there are integrated circuit piezoelectric voltage mode-type sensors that feature built-in microelectronic amplifiers, and convert the high-impedance charge into a low-impedance voltage output. Specifically, a Model 106B manufactured by PCB Piezotronics is used which is a high sensitivity, acceleration compensated integrated circuit piezoelectric quartz pressure sensor suitable for measuring low pressure acoustic phenomena in hydraulic and pneumatic systems. It has the unique capability to measure small pressure changes of less than 0.001 psi under high static conditions. The 106B has a 300 mV/psi sensitivity and a resolution of 91 dB (0.0001 psi).

The pressure sensors incorporate a built-in MOSFET microelectronic amplifier to convert the high-impedance charge output into a low-impedance voltage signal. The sensor is powered from a constant-current source and can operate over long coaxial or ribbon cable without signal degradation. The low-impedance voltage signal is not affected by triboelectric cable noise or insulation resistance-degrading contaminants. Power to operate integrated circuit piezoelectric sensors generally takes the form of a low-cost, 24 to 27 VDC, 2 to 20 mA constant-current supply. A data acquisition system of the present invention may incorporate constant-current power for directly powering integrated circuit piezoelectric sensors.

Most piezoelectric pressure sensors are constructed with either compression mode quartz crystals preloaded in a rigid housing, or unconstrained tourmaline crystals. These designs give the sensors microsecond response times and resonant frequencies in the hundreds of kHz, with minimal overshoot or ringing. Small diaphragm diameters ensure spatial resolution of narrow shock waves.

The output characteristic of piezoelectric pressure sensor systems is that of an AC-coupled system, where repetitive signals decay until there is an equal area above and below the original base line. As magnitude levels of the monitored event fluctuate, the output remains stabilized around the base line with the positive and negative areas of the curve remaining equal.

It is also within the scope of the present invention that any strain sensing technique may be used to measure the variations in strain in the pipe, such as highly sensitive piezoelectric, electronic or electric, strain gages and piezo-resistive strain gages attached to the pipe 12. Other strain gages include resistive foil type gages having a race track configuration similar to that disclosed U.S. Patent Application Serial No. 09/344,094, filed June 25, 1999, now US 6,354,147. The invention also contemplates strain gages being disposed about a predetermined portion of the circumference of pipe 12. The axial placement of and separation distance $\Delta X_1$, $\Delta X_2$ between the strain sensors are determined as described herein above.

It is also within the scope of the present invention that any other strain sensing technique may be used to measure the variations in strain in the tube, such as highly sensitive piezoelectric, electronic or electric, strain gages attached to or embedded in the tube 14.

Note that this entrained air or gas volume fraction measurement GVFair may be used with any flow meter to correct for errors introduced into a measurement by entrained air. For instance, an electromagnetic flow meter will show an error when entrained air exists in the mixture. The present invention may be used to correct for this error.

Referring to 13, the present invention contemplates an apparatus 300 for providing a volumetric flow measurement 11 that is compensated for entrained gas/air in the liquid or mixture 12. The apparatus 300 includes a device 302 for measuring the gas volume fraction of the mixture, which is substantially similar to that described herein before, and an electromagnetic flow meter 304 (also know as a Magmeter) for measuring the uncompensated volumetric flow rate of the mixture 12 within the pipe 14. As shown, the GVF device 302 provides a signal 8 indicative of the gas volume fraction of the mixture 12 to the electromagnetic flow meter 304. The magmeter 304 then compensates (or corrects) volumetric flow measurement 308 for entrained gas/air in response to the gas volume fraction signal 8. For example, this can be accomplished in accordance with the following equation:

$$\text{Compensated Vol. Flow Rate} = \text{Vol. Flow Rate} \, (1 - \text{Gas Volume Fraction})$$

The electromagnetic flow meter 308 may comprise an electromagnetic flow meter as described hereinbefore, such as that 8700 Series Magmeter manufactured by Rosemount. However, one will appreciate that the entrained air meter portion may used to compensate or correct any volumetric flow meter that is able to provide a volumetric flow meter measurement.

While the gas volume fraction signal 8 was provided to the magmeter 304 to compensate the volumetric flow rate, the invention contemplates that the correction for entrained gas/air may be performed in the GVF device 302.

Similarly, this GVF device 302 for measuring entrained air or gas volume fraction measurement GVFair 8 may be used with any consistency meter to correct for errors introduced into a measurement by entrained gas/air. For instance, a consistency meter will show an error when entrained air exists in the mixture. The present invention may be used to correct for this error.

Referring to 14, the present invention contemplates an apparatus 400 for providing a consistency measurement 11 that is compensated for entrained gas/air in the mixture or slurry 12 (e.g. paper/pulp slurry). The apparatus 300 includes a device 302 for measuring the gas volume fraction of the slurry 12, which is substantially similar to that described herein before, and a consistency meter 402 for measuring the uncompensated consistency measurement of the mixture 12 within the pipe 14. As shown, the GVF device 302 provides a signal 8 indicative of the gas volume fraction of the slurry 12 to the consistency meter 402. The consistency 402 then compensates (or corrects) consistency measurement 404 for entrained gas/air in response to the gas volume fraction signal 8. For example, this can be accomplished in accordance with the following equation:

$$\text{Cmixture} = \text{Uncompensated Consistency Measurement} - (1.4)(\text{GVFair})$$

The consistency meter 402 may comprise a microwave consistency meter as described hereinbefore, such as that 8700 Series Magmeter manufactured by Rosemount. However, one will appreciate that the consistency meter portion may used to compensate or correct any consistency meter that is able to provide a consistency measurement.

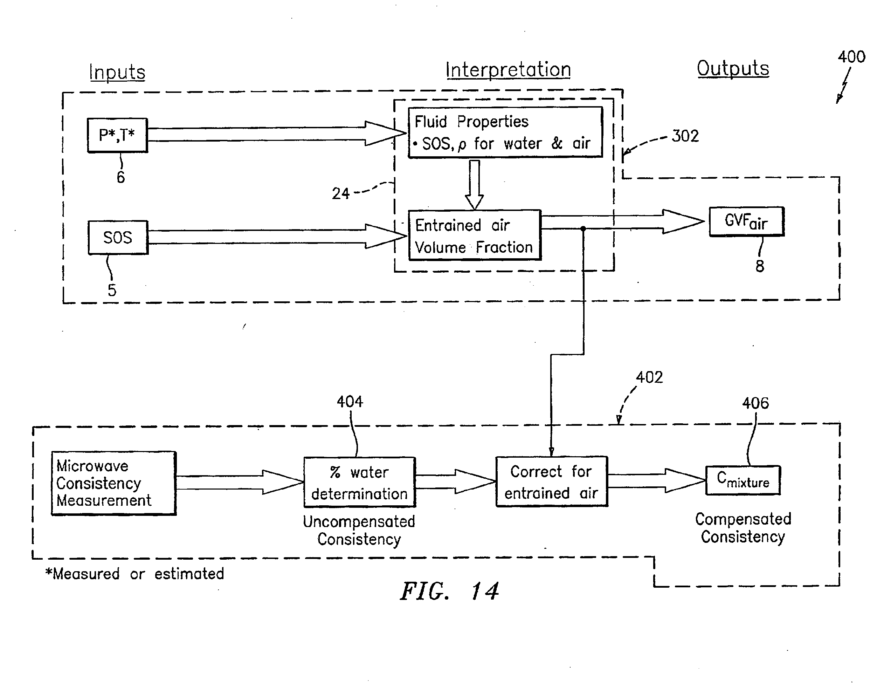

While the gas volume fraction signal 8 was provided to the consistency meter 402 to compensate the consistency measurement as shown in Figs. 14, the invention contemplates that the correction for entrained gas/air may be performed in the GVF device 302. Referring to Fig. 15, the present invention contemplates the consistency meter 402 in accordance with the present invention receives and processes the measured pressure input 6 and the gas volume fraction input 8 (compensated for pressure) to provide a corrected consistency output 406 to the plant DCS 410.

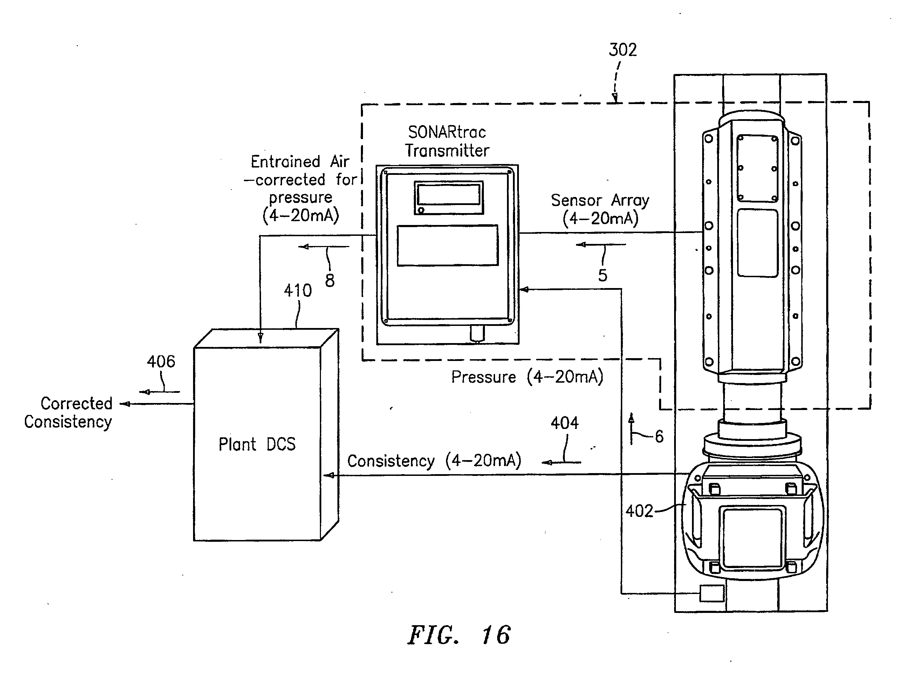

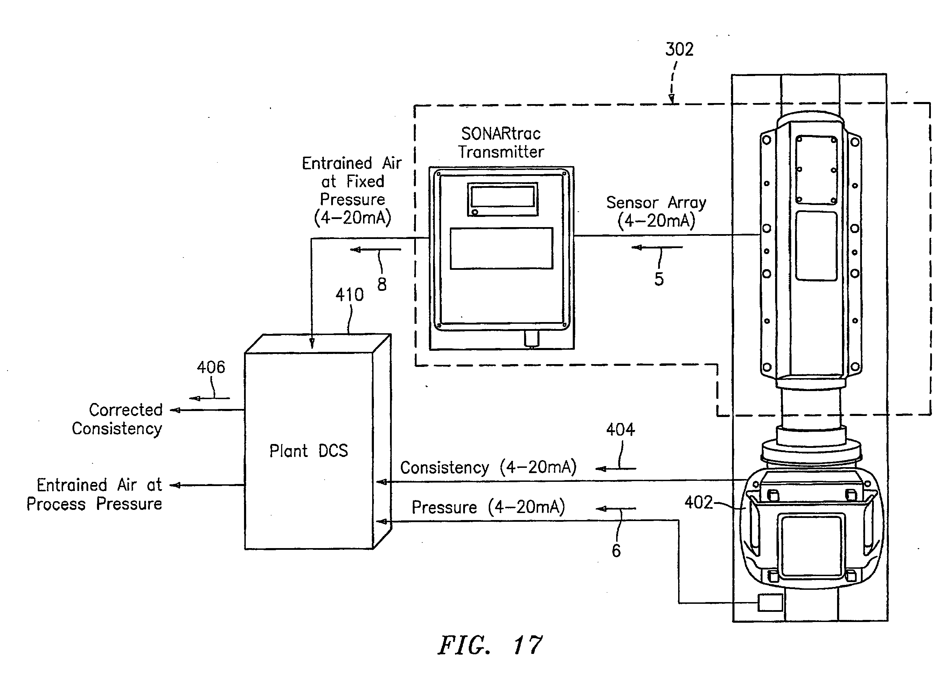

In Fig. 16, the plant DCS 410 in accordance with the present invention receives and process the uncorrected consistency measurement 404 from the consistency meter 402 and a GVF input 8 (compensated for pressure) and provides a corrected consistency output 406. In Fig. 17, the plant DCS 410 in accordance with the present invention receives and processes an uncorrected consistency measurement, a pressure measurement, and GVF measurement and provides a corrected consistency measurement 406 and a GVF measurement (compensated for process pressure).

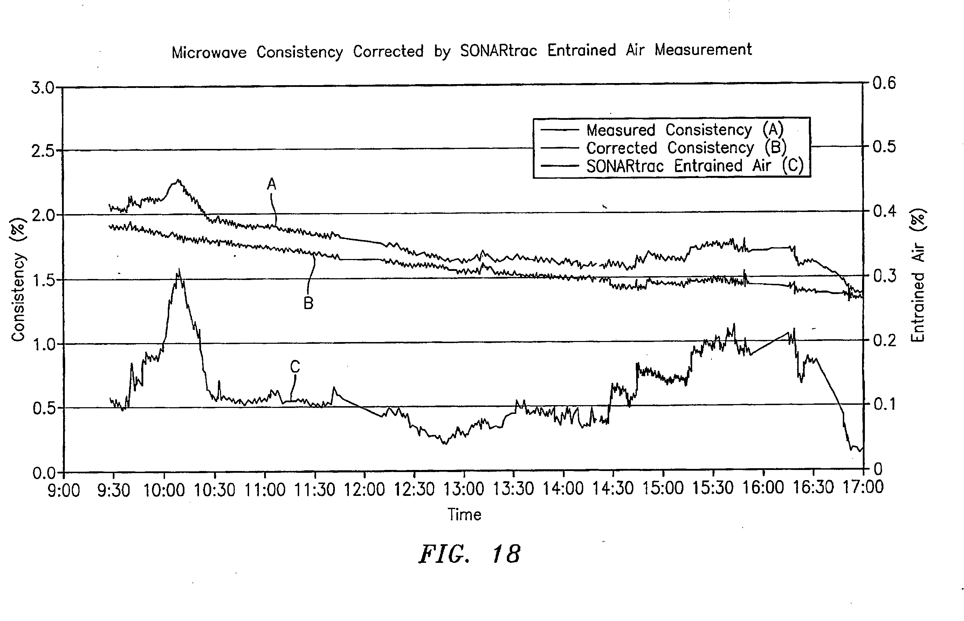

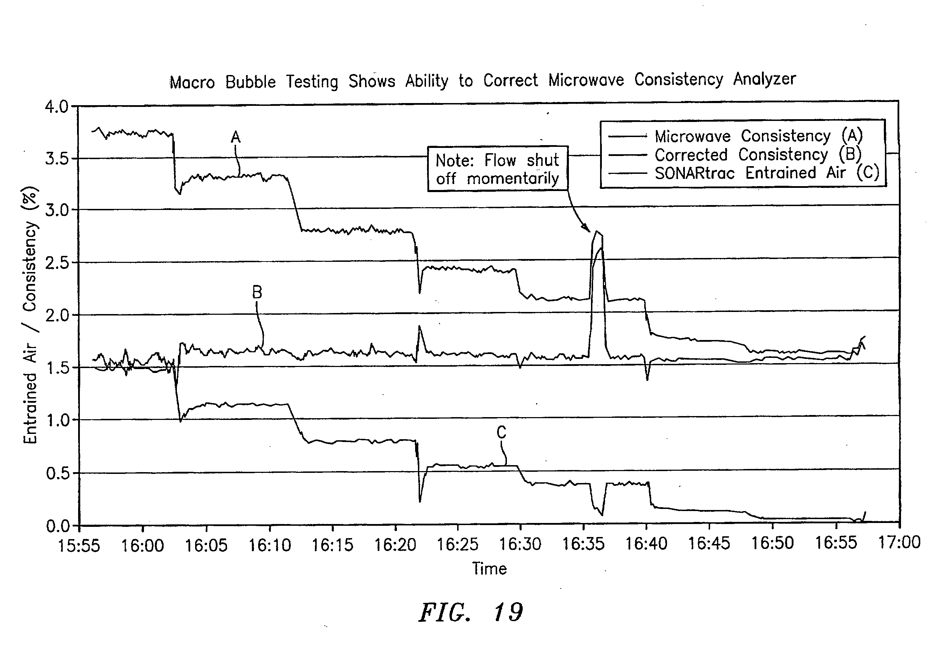

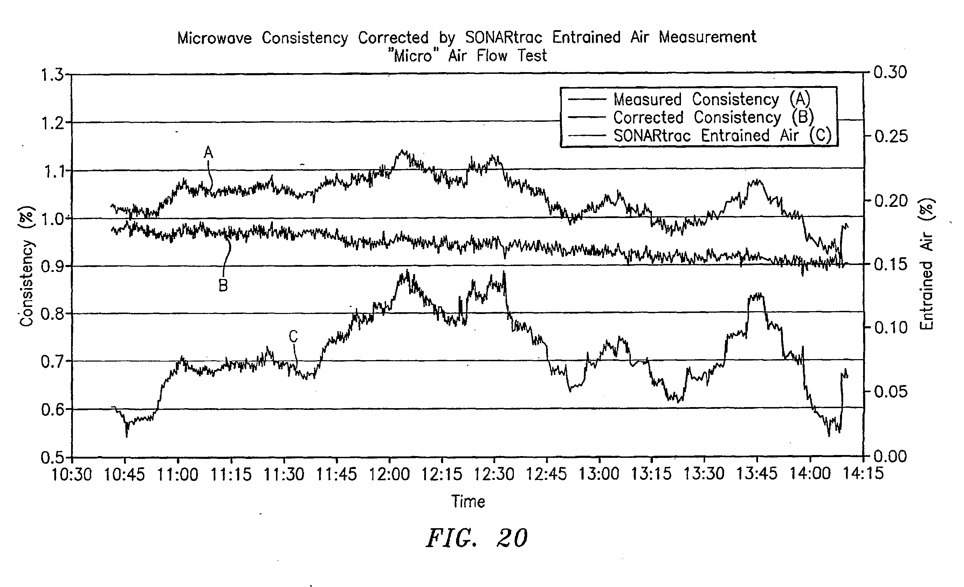

Figs. 18 - 20 show data from an apparatus 400 in accordance with the present invention that measured and corrected for entrained air within a slurry propagating through a pipe. Fig. 18 shows the measured consistency from a consistency meter 402, the measured GVFair for a GVF meter 302 and the corrected consistency 406 over an eight hour time period. Fig. 19 shows the measured consistency from a consistency meter 402, the measured GVFair for a GVF meter 302 and the corrected consistency 406 for a slurry having macro-bubbles flowing therein. Fig. 20 shows the measured consistency from a consistency meter 402, the measured GVFair for a GVF meter 302 and the corrected consistency 406 for a slurry having micro-bubbles flowing therein. Consequently, as shown, the present invention eliminates the big bubble/small bubble analysis/compensation that other flow meters attempt to do to compensation for entrained gas/air in the process flow 12.

It should be understood that any of the features, characteristics, alternatives or modifications described regarding a particular embodiment herein may also be applied, used, or incorporated with any other embodiment described herein.

Although the invention has been described and illustrated with respect to exemplary embodiments thereof, the foregoing and various other additions and omissions may be made therein and thereto without departing from the scope of the claims.

**Claims**

1.    An apparatus for measuring a parameter of a process flow flowing within a pipe, wherein the process flow is a mixture including, in addition to the mixture components, an entrained gas component, the apparatus comprising:

a first meter portion (3) for providing a meter measurement signal (7) indicative of a measurement parameter of the flow of the mixture including the entrained gas component propagating through the pipe;

a second meter portion (2) including a sensor for providing a sound measurement signal (5) indicative of the speed of sound propagating within the pipe, the sound measurement signal and at least one of a temperature and a pressure representative of the mixture being indicative of the entrained gas component of the mixture; and

a processor (24) responsive to the meter measurement signal (7), to the sound measurement signal (5) and to said at least one of a temperature and a pressure for providing a compensated meter measurement signal (11) indicative of the measurement parameter of the mixture corrected for the entrained gas component of the mixture in the flow propagating through the pipe, wherein the compensated meter measurement signal is indicative of the measurement parameter of the mixture excluding the entrained gas component.

2. The apparatus of claim 1, wherein the second meter portion includes at least two pressure sensors at different axial locations along the pipe, each of the pressure sensors providing a respective pressure signal indicative of a pressure disturbance within the pipe at a corresponding axial position, wherein the processor, responsive to said pressure signals, provides a signal indicative of the gas volume fraction of the process flow flowing within the pipe.

3. The apparatus of claim 1, wherein the first meter portion includes at least two pressure sensors at different axial locations along the pipe, each of the pressure sensors providing a respective pressure signal indicative of a pressure disturbance within the pipe at a corresponding axial position, wherein the processor, responsive to said pressure signals, provides a signal indicative of the volumetric flow of the process flow flowing within the pipe.

4. The apparatus of claim 1, wherein the first meter portion is a volumetric flow meter and the meter measurement signal is indicative of the volumetric flow of the process flow.

5. The apparatus of claim 4, wherein the volumetric flow meter is an electromagnetic flow meter.

6. The apparatus of claim 1, wherein the first meter portion is a consistency flow meter and the meter measurement signal is indicative of the consistency of the process flow.

7. The apparatus of claim 6, wherein the consistency meter is a microwave consistency meter.

8. The apparatus of claim 1, wherein the processor determines the slope of an acoustic ridge in the k-w plane to determine a parameter of the process flow flowing in the pipe.

9. The apparatus of claim 2 or 3, wherein the pressure signals are indication of vortical disturbances within the fluid flow.

10. The apparatus of claim 9, wherein the parameter of the fluid is one of velocity of the process flow and the volumetric flow of the process fluid.

11. The apparatus of claim 1, wherein the processor determines the slope of a convective ridge in the k-w plane to determine the velocity of the fluid flowing in the pipe.

12. The apparatus of claim 1, wherein the processor determines the volumetric flow rate of the fluid flowing in the pipe in response to the velocity of the fluid.

13. A method for measuring a parameter of a process flow flowing within a pipe, wherein the process flow is a mixture including, in addition to the mixture components, an entrained gas component, the method comprising:

receiving a meter measurement signal (7) indicative of a measurement parameter of the flow of the mixture including the entrained gas component propagating through the pipe;

receiving a sound measurement signal (5) indicative of the speed of sound propagating within the pipe, the sound measurement signal and at least one of a temperature and a pressure representative of the mixture being indicative of the entrained gas component of the mixture; and

determining on the basis of the meter measurement signal, the sound measurement signal and said at least one of a temperature and a pressure a compensated meter measurement signal (11) indicative of the measurement parameter of the mixture corrected for the entrained gas component of the mixture in the flow propagating through the pipe, wherein the compensated meter measurement signal is indicative of the measurement parameter of the mixture excluding the entrained gas component.

14. The method of claim 13, wherein the meter measurement signal is indicative of the volumetric flow of the process flow.

15. The method of claim 13, wherein the meter measurement signal is indicative of the consistency of the process flow.

16. The method of claim 13, further determining the slope of an acoustic ridge in the k-w plane to determine a parameter of the process flow flowing in the pipe.

17. The method of claim 13, further determining the slope of a convective ridge in the k-w plane to determine the velocity of the fluid flowing in the pipe.

18. The method of claim 13, further determining the volumetric flow rate of the fluid flowing in the pipe in response to the velocity of the fluid.

**Patentansprüche**

1. Vorrichtung zum Messen eines Parameters einer in einem Rohr fließenden Prozessströmung, wobei die Prozessströmung eine Mischung ist, die zusätzlich zu den Mischungskomponenten eine mitgeführte Gaskomponente beinhaltet, wobei die Vorrichtung aufweist:

einen ersten Messvorrichtungsbereich (3) zum Bereitstellen eines Messvorrichtungs-Messsignals (7), das einen Messparameter der Strömung der die mitgeführte Gaskomponente beinhaltenden Mischung anzeigt, die sich durch das Rohr fortpflanzt;
einen zweiten Messvorrichtungsbereich (2) mit einem Sensor zum Bereitstellen eines Schallmesssignals (5), das die Geschwindigkeit des sich in dem Rohr fortpflanzenden Schalls anzeigt, wobei das Schallmesssignal und mindestens ein Parameter von einer Temperatur und einem Druck, die für die Mischung repräsentativ sind, die mitgeführte Gaskomponente der Mischung anzeigen; und
einen Prozessor (24), der auf das Messvorrichtungs-Messsignal (7), das Schallmesssignal (5) und den mindestens einen Parameter von der Temperatur und dem Druck anspricht, um ein kompensiertes Messvorrichtungs-Messsignal (11) bereitzustellen, das den Messparameter der Mischung korrigiert hinsichtlich der mitgeführten Gaskomponente der Mischung in der sich durch das Rohr fortpflanzenden Strömung anzeigt, wobei das kompensierte Messvorrichtungs-Messsignal den Messparameter der Mischung unter Ausschluss der mitgeführten Gaskomponente anzeigt.

2. Vorrichtung nach Anspruch 1,
wobei der zweite Messvorrichtungsbereich mindestens zwei Drucksensoren an verschiedenen axialen Stellen entlang des Rohrs aufweist, wobei jeder der Drucksensoren ein jeweiliges Drucksignal bereitstellt, das eine Druckstörung innerhalb des Rohrs an einer entsprechenden axialen Position anzeigt, wobei der Prozessor, ansprechend auf die Drucksignale, ein Signal liefert, das den Gasvolumenanteil der in dem Rohr fließenden Prozessströmung anzeigt.

3. Vorrichtung nach Anspruch 1,
wobei der erste Messvorrichtungsbereich mindestens zwei Drucksensoren an verschiedenen axialen Stellen entlang des Rohrs aufweist, wobei jeder der Drucksensoren ein jeweiliges Drucksignal bereitstellt, das eine Druckstörung innerhalb des Rohres an einer entsprechenden axialen Position anzeigt, wobei der Prozessor, ansprechend auf die Drucksignale, ein Signal liefert, das den Volumenstrom der Prozessströmung in dem Rohr anzeigt.

4. Vorrichtung nach Anspruch 1,
wobei der erste Messvorrichtungsbereich ein Volumenstrom-Messgerät ist und das Messvorrichtungs-Messsignal den Volumenstrom der Prozessströmung anzeigt.

5. Vorrichtung nach Anspruch 4,
wobei das Volumenstrom-Messgerät ein elektromagnetischer Durchflussmesser ist.

6. Vorrichtung nach Anspruch 1,

wobei der erste Messvorrichtungsbereich ein Konsistenz-Durchflussmesser ist und das Messvorrichtungs-Messsignal die Konsistenz der Prozessströmung anzeigt.

**7.** Vorrichtung nach Anspruch 6,
wobei das Konsistenz-Messgerät ein Mikrowellen-Konsistenzmessgerät ist.

**8.** Vorrichtung nach Anspruch 1,
wobei der Prozessor die Neigung eines akustischen Grats in der k-w-Ebene bestimmt, um einen Parameter der in dem Rohr fließenden Prozessströmung zu bestimmen.

**9.** Vorrichtung nach Anspruch 2 oder 3,
wobei die Drucksignale Wirbelstörungen in der Fluidströmung anzeigen.

**10.** Vorrichtung nach Anspruch 9,
wobei es sich bei dem Parameter des Fluids um einen von der Geschwindigkeit der Prozessströmung und dem Volumenstrom des Prozessfluids handelt.

**11.** Vorrichtung nach Anspruch 1,
wobei der Prozessor die Neigung eines konvektiven Grats in der k-w-Ebene bestimmt, um die Geschwindigkeit des in dem Rohr strömenden Fluids zu bestimmen.

**12.** Vorrichtung nach Anspruch 1,
wobei der Prozessor die Volumenströmungsrate des in dem Rohr strömenden Fluids in Reaktion auf die Geschwindigkeit des Fluids bestimmt.

**13.** Verfahren zum Messen eines Parameters einer in einem Rohr fließenden Prozessströmung, wobei die Prozessströmung eine Mischung ist, die zusätzlich zu den Mischungskomponenten eine mitgeführte Gaskomponente beinhaltet, wobei das Verfahren folgende Schritte aufweist:

Empfangen eines Messvorrichtungs-Messsignals (7), das einen Messparameter der Strömung der die mitgeführte Gaskomponente beinhaltenden Mischung anzeigt, die sich durch das Rohr fortpflanzt;
Empfangen eines Schallmesssignals (5), das die Geschwindigkeit des sich in dem Rohr fortpflanzenden Schalls anzeigt, wobei das Schallmesssignal und mindestens ein Parameter von einer Temperatur und einem Druck, die für die Mischung repräsentativ sind, die mitgeführte Gaskomponente der Mischung anzeigen; und
auf der Basis des Messvorrichtungs-Messsignals, des Schallmesssignals und des mindestens einen Parameters der Temperatur und des Drucks erfolgendes Bestimmen eines kompensierten Messvorrichtungs-Messsignals (11), das den Messparameter der Mischung korrigiert hinsichtlich der mitgeführten Gaskomponente der Mischung in der sich durch das Rohr fortpflanzenden Strömung anzeigt, wobei das kompensierte Messvorrichtungs-Messsignal den Messparameter der Mischung unter Ausschluss der mitgeführten Gaskomponente anzeigt.

**14.** Verfahren nach Anspruch 13,
wobei das Messvorrichtungs-Messsignal den Volumenstrom der Prozessströmung anzeigt.

**15.** Verfahren nach Anspruch 13,
wobei das Messvorrichtungs-Messsignal die Konsistenz der Prozessströmung anzeigt.

**16.** Verfahren nach Anspruch 13,
bei dem ferner die Neigung eines akustischen Grats in der k-w-Ebene bestimmt wird, um einen Parameter der in dem Rohr fließenden Prozessströmung zu bestimmen.

**17.** Verfahren nach Anspruch 13,
bei dem ferner die Neigung eines konvektiven Grats in der k-w-Ebene bestimmt wird, um die Geschwindigkeit des in dem Rohr strömenden Fluids zu bestimmen.

**18.** Verfahren nach Anspruch 13,
bei dem ferner die Volumenströmungsrate des in dem Rohr strömenden Fluids in Reaktion auf die Geschwindigkeit des Fluids bestimmt wird.

**Revendications**

1. Appareil pour mesurer un paramètre d'un flux de production s'écoulant à l'intérieur d'un tuyau, le flux de production représentant un mélange englobant, en plus des composants du mélange, un composant sous la forme d'un gaz entraîné, l'appareil comprenant :

   une première portion de réglage du débit (3) pour procurer un signal de mesure de réglage du débit (7) fournissant une indication concernant un paramètre de mesure de l'écoulement du mélange englobant le composant sous la forme d'un gaz entraîné, qui se propage à travers le tuyau ;
   une deuxième portion de réglage du débit (2) englobant un capteur pour procurer un signal de mesure du son (5) fournissant une indication quant à la vitesse du son qui se propage à l'intérieur du tuyau, le signal de mesure du son et d'au moins un élément choisi parmi une température et une pression représentatives du mélange, fournissant une indication concernant le composant du mélange, sous la forme d'un gaz entraîné ; et
   un processeur (24) sensible au signal de mesure de réglage du débit (7), au signal de mesure du son (5) et audit au moins un élément choisi parmi la température et la pression, pour procurer un signal compensé de mesure de réglage du débit (11) fournissant une indication concernant le paramètre de mesure du mélange, corrigé pour la prise en compte du composant du mélange sous la forme d'un gaz entraîné, dans l'écoulement qui se propage à travers le tuyau, le signal compensé de mesure de réglage du débit fournissant une indication concernant le paramètre de mesure du mélange, à l'exclusion du composant sous la forme d'un gaz entraîné.

2. Appareil selon la revendication 1, dans lequel la deuxième portion de réglage du débit englobe au moins deux capteurs de pression à des endroits axiaux différents le long du tuyau, chacun des capteurs de pression procurant un signal de pression respectif fournissant une indication quant à la perturbation de la pression au sein du tuyau à un endroit axial correspondant, le processeur, sensible auxdits signaux de pression, procurant un signal fournissant une indication quant à la fraction volumique du gaz du flux de production s'écoulant à l'intérieur du tuyau.

3. Appareil selon la revendication 1, dans lequel la première portion de réglage du débit englobe au moins deux capteurs de pression à des endroits axiaux différents le long du tuyau, chacun des capteurs de pression procurant un signal de pression respectif fournissant une indication quant à la perturbation de la pression au sein du tuyau à un endroit axial correspondant, le processeur, sensible auxdits signaux de pression, procurant un signal fournissant une indication quant à l'écoulement volumétrique du flux de production s'écoulant à l'intérieur du tuyau.

4. Appareil selon la revendication 1, dans lequel la première portion de réglage du débit représente un dispositif de mesure de l'écoulement volumétrique et le signal de mesure fournit une indication quant à l'écoulement volumétrique du flux de production.

5. Appareil selon la revendication 4, dans lequel le dispositif de mesure de l'écoulement volumétrique est un dispositif de mesure de l'écoulement de type électromagnétique.

6. Appareil selon la revendication 1, dans lequel la première portion de réglage du débit représente un dispositif de mesure pour mesurer la régularité de l'écoulement et le signal de mesure de réglage du débit fournit une indication quant à la régularité du flux de production.

7. Appareil selon la revendication 6, dans lequel le dispositif de mesure de la régularité est un dispositif de mesure de la régularité du type à micro-ondes.

8. Appareil selon la revendication 1, dans lequel le processeur détermine la pente d'une crête acoustique dans le plan k-w afin de déterminer un paramètre du flux de production s'écoulant dans le tuyau.

9. Appareil selon la revendication 2 ou 3, dans lequel les signaux de pression fournissent une indication concernant les perturbations tourbillonnaires au sein de l'écoulement du fluide.

10. Appareil selon la revendication 9, dans lequel le paramètre du fluide est un paramètre choisi parmi la vitesse du flux de production et l'écoulement volumétrique du fluide de production.

11. Appareil selon la revendication 1, dans lequel le processeur détermine la pente d'une crête convective dans le plan k-w afin de déterminer la vitesse du fluide s'écoulant dans le tuyau.

**12.** Appareil selon la revendication 1, dans lequel le processeur détermine le débit volumétrique du fluide s'écoulant dans le tuyau, en réponse à la vitesse du fluide.

**13.** Procédé pour mesurer un paramètre d'un flux de production s'écoulant à l'intérieur d'un tuyau, le flux de production représentant un mélange englobant, en plus des composants du mélange, un composant sous la forme d'un gaz entraîné, le procédé comprenant le fait de :

recevoir un signal de mesure de réglage du débit (7) fournissant une indication concernant un paramètre de mesure de l'écoulement du mélange englobant le composant sous la forme d'un gaz entraîné, qui se propage à travers le tuyau ;
recevoir un signal de mesure du son (5) fournissant une indication quant à la vitesse du son qui se propage à l'intérieur du tuyau, le signal de mesure du son et d'au moins un élément choisi parmi une température et une pression représentatives du mélange fournissant une indication concernant le composant du mélange, sous la forme d'un gaz entraîné ; et
déterminer, sur base du signal de mesure de réglage du débit, du signal de mesure du son et dudit au moins un élément choisi parmi la température et la pression, un signal compensé de mesure de réglage du débit (11) fournissant une indication concernant le paramètre de mesure du mélange, corrigé pour la prise en compte du composant du mélange sous la forme d'un gaz entraîné, dans l'écoulement qui se propage à travers le tuyau, le signal compensé de mesure de réglage du débit fournissant une indication concernant le paramètre de mesure du mélange, à l'exclusion du composant sous la forme d'un gaz entraîné.

**14.** Procédé selon la revendication 13, dans lequel le signal de mesure de réglage du débit fournit une indication quant à l'écoulement volumétrique du flux de production.

**15.** Procédé selon la revendication 13, dans lequel le signal de mesure de réglage du débit fournit une indication quant à la régularité du flux de production.

**16.** Procédé selon la revendication 13, déterminant en outre la pente d'une crête acoustique dans le plan k-w afin de déterminer un paramètre du flux de production s'écoulant dans le tuyau.

**17.** Procédé selon la revendication 13, déterminant en outre la pente d'une crête de convection dans le plan k-w afin de déterminer la vitesse du fluide s'écoulant dans le tuyau.

**18.** Procédé selon la revendication 13, déterminant en outre le débit volumétrique du fluide s'écoulant dans le tuyau, en réponse à la vitesse du fluide.

*FIG. 1*

*Measured or Estimated

FIG. 2

Fluid Properties

• SOS, $\rho$ for water & gas

P*,T*

6

5

SOS

Entrained Gas
Volume Fraction

GVF Gas

8

Correct for Void
Fraction of Gas

$Q_{liquid}$

11

7

Velocity

Total
Mixture Flow Rate

$Q_{mixture}$

9

*Measured or estimated

24

13

*FIG. 3*

EP 1 565 709 B1

*FIG. 4*

SOS as Function of Entrained Air
(5% consistency)

FIG. 5

SOS as Function of Entrained Air
(p=4 atm)

FIG. 6

SOS as Function of Entrained Air

FIG. 7

SOS as Function of Entrained Air

FIG. 8

K-ω plot showing Acoustic Ridges
(in water with entrained air)

FIG. 9

*FIG. 10*

*FIG. 11*

K–ω plot showing Convective Ridge

Frequency

Optimization Function

14 ft/s

0 5 10 15 20 25 30
Velocity (ft/s)

—200

Convection Velocity
determined by the slope of
Convective Ridge
U=ω/k

0

Wave Number

*FIG. 12*

EP 1 565 709 B1

300

**Fluid Properties**
• SOS, $\rho$ for water & gas

302

P*,T*

6

24

**Entrained Gas Volume Fraction**

$GVF_{Gas}$

8

SOS

5

304

308

Electromagnetic Volumetric Flow Measurement

Total Mixture Flow Rate

Correct for entrained Gas

$Q_{mixture}$

11

Compensated Volumetric Flow Rate Measurement

*Measured or estimated

*FIG. 13*

EP 1 565 709 B1

400

Fluid Properties
• SOS, $\rho$ for water & air

P*,T*

6

302

24

SOS

5

Entrained air
Volume Fraction

GVF$_{air}$

8

402

404

406

Microwave
Consistency
Measurement

% water
determination

Correct for
entrained air

C$_{mixture}$

Uncompensated
Consistency

Compensated
Consistency

*Measured or estimated

*FIG. 14*

EP 1 565 709 B1

FIG. 15

EP 1 565 709 B1

302

SONARtrac
Transmitter

Entrained Air
—corrected for
pressure
(4—20mA)

Sensor Array
(4—20mA)

8

5

410

406

Corrected
Consistency

Plant DCS

Pressure (4—20mA)

404

6

Consistency (4—20mA)

402

FIG. 16

FIG. 17

Microwave Consistency Corrected by SONARtrac Entrained Air Measurement

*FIG. 18*

EP 1 565 709 B1

Macro Bubble Testing Shows Ability to Correct Microwave Consistency Analyzer

Microwave Consistency (A)
Corrected Consistency (B)
SONARtrac Entrained Air (C)

Note: Flow shut off momentarily

A

B

C

Entrained Air / Consistency (%)

4.0  3.5  3.0  2.5  2.0  1.5  1.0  0.5  0.0

Time

15:55  16:00  16:05  16:10  16:15  16:20  16:25  16:30  16:35  16:40  16:45  16:50  16:55  17:00

FIG. 19

36

Microwave Consistency Corrected by SONARtrac Entrained Air Measurement
"Micro" Air Flow Test

FIG. 20

**REFERENCES CITED IN THE DESCRIPTION**

**Patent documents cited in the description**

- US 729994 A
- US 6609069 B
- US 34409499 A
- US 6354147 B
- US 72999402 A
- US 99722101 A
- US 6587798 B

- US 00774901 A
- US 00773601 A
- US 72999400 A
- US 92559897 A
- US 6016702 A
- US 224821 A

**Non-patent literature cited in the description**

- Fluid Mechanics and Measurements in two-phase flow Systems. *Institution of mechanical engineers, proceedings 1969-1970,* 24 September 1969, vol. 184

- **A. P.DOWLING et al.** Sound and Sources of Sound. Halsted Press, 1983